# EUROPÄISCHE PATENTSCHRIFT

(11) **EP 0 478 649 B1**
(45) Veröffentlichungstag und Bekanntmachung des Hinweises auf die Patenterteilung: **07.12.1994**
(21) Anmeldenummer: 90909711.5
(22) Anmeldetag: 15.06.1990
(51) Int. Cl.: B05B 15/12, B05C 15/00

(54) **KABINE ZUM SPRÜHBESCHICHTEN VON GEGENSTÄNDEN MIT PULVERFÖRMIGEM BESCHICHTUNGSMATERIAL**
CABIN FOR SPRAY-COATING WORKPIECES WITH MATERIAL IN POWDER FORM
CABINE POUR L'ENDUCTION D'OBJETS AVEC UN MATERIAU PULVERULENT

(30) Priorität: 16.06.1989 DE 8907539 U
(43) Veröffentlichungstag der Anmeldung: 08.04.1992
(73) Patentinhaber: FARB-TEC GESELLSCHAFT FUR BESCHICHTUNGSKABINEN SYSTEME MBH, D-22359 Hamburg (DE)
(72) Erfinder: PINGEL, Joachim, D-2000 Hamburg 67 (DE)
(74) Vertreter: Patentanwälte Wenzel & Kalkoff
(86) Internationale Anmeldenummer: EP9000941
(87) Internationale Veröffentlichungsnummer: WO9015670

(56) Entgegenhaltungen:
- EP-A- 0 200 681
- DE-A- 3 538 800
- DE-C- 3 412 275
- DE-C- 3 516 826
- DE-C- 3 714 052
- US-A- 4 430 956

## Beschreibung

Die Erfindung betrifft eine Kabine zum Sprühbeschichten von Werkstücken mit pulverförmigem Beschichtungsmaterial, in einem von Wandungen, einem Kabinenboden und einer Kabinendecke bestimmten Kabineninnenraum mit definierter Längsachse, in deren Richtung die Werkstücke in bzw. durch die Kabine bewegbar sind, wobei der Kabine eine einen starren Träger umfassende Reinigungsvorrichtung zugeordnet ist, die im Kabineninnenraum in Richtung von dessen Längsachse bewegbar ist, der Träger mit bei Arbeitsbewegung der Reinigungsvorrichtung mindestens gegen Teile der Querschnittskontur des Kabineninnenraums (Innenkontur) nachgiebig anliegenden mechanischen, gegen die Innenraumwandung gerichteten Reinigungselementen bestückt ist und die Reinigungsvorrichtung der Innenkontur unter Belassen eines Arbeitsspalts zwischen Träger und Innenkontur angepaßt ist, wobei der Spalt von den Reinigungselementen elastisch überbrückt ist.

Es ist eine Kabine der genannten Art bekannt (EP-A-0 200 681), die aus einem elektrisch nicht leitendem Kunststoff besteht und bei der der untere Teil der Kabine einen V-förmigen Querschnitt aufweist, der in einen Sammelkanal übergeht, der an eine Absaugvorrichtung angeschlossen ist. Zur Reinigung der Kabine ist ein der Innenform der Kabine angepaßter hohler Rahmen vorgesehen. Die Reinigungsvorrichtung weist ferner Schwämme auf, die entweder am gleichen Rahmen oder an einem gesonderten Rahmen befestigt sind. Weiterhin weist der Rahmen Öffnungen auf, durch die über eine Drucklufteinrichtung Druckluft in die Kabine geblasen wird. Die Funktion der so ausgebildeten Reinigungsvorrichtung ist insgesamt gesehen nicht zufriedenstellend, da die nachgiebig ausgebildeten, am Rahmen befestigten Schwämme ohne ausreichende Kraftausübung auf die an der Innenwandung abgesetzten Pulverrückstände einwirken und weil durch die erzeugte Druckluft ein Vagabundieren und eine Verwirbelung des abgelösten Pulvers ausgelöst ist, das sich zudem undefiniert insbesondere in den Eckbereichen der Kabine ablagern kann. Zum anderen muß diese Vorrichtung mit relativ hohen Drücken arbeiten, um ein befriedigendes Ablösen des Pulvers von der Innenwandung zu erreichen. Dies führt wiederum leicht zu Pulveraustritt aus der Kabine, was prinzipiell vermieden werden soll, um den vorgeschriebenen Arbeits- und Umweltschutzerfordernissen zu genügen.

Weiterhin sind Kabinen bekannt, die der sich insbesondere aus Gründen der höheren Umweltverträglichkeit zunehmend zum Einsatz gelangenden elektrostatischen Pulverbeschichtung dienen, wie sie allgemein im VDMA-Einheitsblatt, 24 371, Teil 1 vom März 1980 und Teil 2 vom August 1983 beschrieben ist. Dabei liegt das Beschichtungsmaterial für die verschiedensten Arten von Bau- oder Arbeitsteilen oder sonstigen Gegenständen des täglichen Bedarfs nicht als in einem Lösungsmittel gelöste Dispersion vor, wird also nicht z.B. im Lackspritzverfahren verarbeitet, sondern es wird in Form eines Granulats aufgebracht. Dieses Granulat wird in der Regel mit Hilfe eines Injektors aus einem fluidisierenden Behälter durch einen Schlauch zu einer Pulverpistole gefördert. In dieser Pistole sind mit Hochspannung beaufschlagte Elektroden montiert, die das Pulver elektrostatisch aufladen. Das aufgeladene Pulver wird von der Pistole in Richtung auf das geerdete Werkstück gesprüht. Am Werkstück lagert sich das geladene Pulver an, und zwar in der Regel mit ca. 40% der versprühten Materialmenge. Der am Werkstück vorbeigesprühte Pulveranteil wird in der Pulverkabine aufgefangen und in den Beschichtungsprozeß zurückgeführt.

Man erkennt hieraus, daß die Hauptprobleme bei dieser Pulverbeschichtung einerseits darin liegen, das nicht dem zu beschichtenden Gegenstand anhaftende Pulver möglichst vollständig zurückzugewinnen, und andererseits darin, bei Farbwechseln eine genügend gründliche, vor allem aber möglichst schnelle Reinigung des Kabineninnenraums herbeizuführen, um die Kabine kurzfristig wieder einsetzen zu können, also die Umrüst- und damit Leerzeiten möglichst kurz zu halten.

In Verfolgung des Gedankens, materialsparend zu arbeiten und beim Einsatz von Pulversprühkabinen möglichst viel von dem versprühten, nicht am Werkstück haftenden Pulver dem Pulverkreislauf schnell wieder zuzuführen, ist eine Kabine bekannt geworden (DE-A-35 38 800), die die Form eines aufrechtstehenden Hohlzylinders hat. In diesem ist ein um die Zylinderachse rotierender, ein- oder mehrflügeliger Decken-, Wand- und Bodenkratzer angeordnet, durch den überschüssiges Pulver von den Innenwänden entfernt und über einen Zulauf im Boden einer Pulverrückgewinnungsvorrichtung zugeführt wird. Eine Gesamtreinigung der Kabine z.B. im Falle von Farbwechseln ist damit nicht möglich, weil der Kratzer einschließlich seiner Antriebselemente selbst verschmutzt und eine manuelle Reinigung erfordert. Weiterhin führen solche permanent betriebenen Kratzer zum Agglomerieren des Pulvers an Wand und Kratzern. Solche Agglomerate können nur durch separate Reinigung, z.B. mit Lösungsmitteln, entfernt werden, um somit die Gefahr der Funktionsuntüchtigkeit zu vermeiden. Bei der rotatorischen Anordnung ist ein Entfernen von überschüssigem Pulver im zentralen Bereich praktisch nicht möglich.

Zur Automatisierung des zeitaufwendigen Reinigungsvorgangs beim Farbwechsel und zur Verkürzung desselben ist eine Kabine bekannt geworden (DE-A-35 16 826), bei der ein entlang der Kabinenachse verfahrbares Rohrringsystem mit Düsen vorgesehen ist, durch die stoßweise Preßluft ausgestoßen wird, um das überschüssige, an den Wänden haftende Pulver aufzuwirbeln. Dieses soll dann durch die Hauptabsaugung abgesaugt werden, während zur Reinigung des Rohrringssystems selbst zusätzlich in den Kabinenstirnwänden Düsen angeordnet sind. Die Funktion dieses bekannten Reinigungssystems ist nicht zufriedenstellend, weil ein Teil des Pulvers, der vor allem Feinstanteile umfaßt, im Kabinenraum vagabundiert und sich undefiniert insbesondere in den Eckbereichen der Kabine ablagert. Dadurch ergibt sich in der Praxis das Erfordernis der Nachreinigung mit Hilfe von ggf. feuchten Schwämmen, Tüchern od.dgl..

Bei einem anderen, aus der Praxis bekannten Reinigungssystem sind die Kabinenwände aus einer abrollbaren Kunststoff-, in der Regel PE-Folie gebildet. Diese Folie wird auf Rollen vorrätig gehalten, die bei Pulverwechsel weitergedreht werden. Aus Sicherheitsgründen sind solche Anordnungen in vielen Ländern überhaupt nicht zulässig und ansonsten, vor allem aufgrund der auftretenden Dichtungsprobleme zwischen den die Wände bestimmenden Folienbahnen, die zudem nur schwierig zu stützen sind, lediglich bedingt einsetzbar. Eine Hauptforderung an Sprühbeschichtungskabinen ist vielmehr, daß das Kabinengehäuse feste Wände hat, um die sich durch abrollbare Kabinenwände ergebenden Probleme eines nicht vollständig abdichtbaren Kabineninnenraums, die zu Schwierigkeiten bei der Einhaltung der Arbeitsschutz- und Brandschutzvorschriften führen, zu vermeiden.

Aus all diesen Gründen verwendet man deshalb für Kabinen mit festen Wänden heute allgemein nach wie vor manuelle Reinigungsverfahren und entfernt das in der Kabine anhaftende Pulver mit Hilfe von Schabern, Schwämmen, feuchten Tüchern oder ähnlichen Hilfsmitteln.

Der Erfindung liegt demgegenüber die Aufgabe zugrunde, die Nachteile solcher bekannten Reinigungssysteme zu vermeiden, eine von menschlichem Einsatz weitestgehend unabhängige vollständige Reinigung, gegebenenfalls unter gleichzeitiger Rückgewinnung eines Optimums an nicht verbrauchtem Pulver, zu ermöglichen, Pressungen an der Kabinenwandung mit dem Ziel einer entsprechend dünneren Dimensionierung derselben zu verringern und die Gefahr unkontrollierter Verwirbelungen in der Kabine sowie eines ungewünschten Pulveraustritts zu reduzieren.

Diese Aufgabe wird erfindungsgemäß dadurch gelöst, daß der Reinigungsvorrichtung eine Unterdruckquelle zum Absaugen des mittels der Reinigungsvorrichtung von der Wandung gelösten Pulvermaterials unmittelbar zugeordnet ist. Während bei den bekannten Reinigungsvorrichtungen (s.z.B. EP-A-0 200 681 und DE-A-35 16 826) mit Druckluft Pulver von den Kabinenwänden abgeblasen wird und Saugluft bei anderen bekannten Kabinen (DE-U-88 12 950) lediglich zum Rückführen von überschüssigem Pulver in den Pulverkreislauf während der Beschichtungsarbeiten zum Einsatz gelangt, wird bei der Erfindung die Saugluft nur noch zum Transport des Pulvers benötigt. Auch kann man - anders als bei dem bekannten Verfahren mit Druckluft und Absaugung, bei dem relativ hohe Drücke zur Erzielung eines überhaupt irgendwie vernünftigen Ergebnisses erforderlich sind, was unter anderem leicht zu Pulveraustritt aus der Kabine führen kann - bei einer Kabine nach der Erfindung mit einem relativ niedrigen Saugdruck arbeiten, so daß nunmehr geringe Pressungen entstehen, die Kabinenwandung entsprechend dünner dimensioniert werden kann und keine Gefahr unkontrollierter Verwirbelungen in der Kabine sowie eines ungewünschten Pulveraustritts besteht. Außerdem ist es für zahlreiche Anwendungsfälle ohnehin günstiger, das bei der Kabinen(end)reinigung anfallende Pulver nicht wiederzuverwenden, da dieses Abreinigungspulver neben der Tatsache, daß es leicht verschmutzt sein kann, von der Menge her vernachlässigbar ist, so daß es nicht lohnt, dafür auch noch die Notwendigkeit eines Säuberns der Reinigungsvorrichtung zu verursachen. Darüber hinaus ermöglicht eine Absaugung von Kabinenwandungen auch dann, wenn diese Stöße, Absätze sowie irgendwelche Verformungen aufweisen, daß diese ebenso wie auch Ecken vollständig gereinigt werden können, ohne daß sie sorgfältig geglättet werden müssen. Auch die Agglomeratbildung kann so noch zuverlässiger verhindert werden.

Eine erfindungsgemäße Kabine läßt sich in vorteilhafter Weise sowohl als Durchlauf- wie auch als Handbeschichtungskabine einsetzen. Im Gegensatz zu dem bekannten Abblasverfahren ergibt sich durch die erfindungsgemäße Ausbildung der Kabine die Möglichkeit eines kontrollierten, einwandfreien Reinigens der Kabine außerhalb des Beschichtungsbetriebs, beispielsweise zum Zwecke des Farbwechsels, mittels mechanischen Abhebens, durch das die elektrostatische Ladung des an den Kabinenwänden haftenden Pulvers beseitigt wird. Dabei sorgen die mechanischen Reinigungselemente für eine vollständige Lösung des Pulvers von der Fläche, an der es haftet. Durch die elastische Anpassung der Reinigungselemente an die Innenwand sind Unebenheiten im Wandungsbereich leicht auszugleichen, so daß der Innenraum weitestgehend vollständig und ohne Hinterlassen von Restverschmutzungen gereinigt werden kann. Dabei werden im Normalfall die Reinigungselemente umlaufend durchgehend angeordnet sein, aber es sind auch Fälle denkbar, insbesondere im Zuge der Umrüstung bestehender Anlagen, bei denen z.B. im Boden ein Filterband vorhanden ist, so daß hier eine Abreinigung unterbleiben kann. Außerdem hat die Reinigungvorrichtung einerseits eine genügende Steifigkeit, zum anderen aber vor allem eine besonders hohe Anpassungsfähigkeit bezüglich ihrer Reinigungselemente und deren Funktion im Hinblick auf Unebenheiten in der Kabinenwand, so daß sich der bestmögliche Reinigungseffekt auf vollautomatisiertem mechanischem Wege erzielen läßt.

Besonders zweckmäßig ist es, wenn der Träger mindestens eine Trägerplatte umfaßt. Vorteilhafterweise können in dem die Kontur bestimmenden Rand die Reinigungselemente in Form von gegen die Wand gerichteten Schabekanten am Rand des Trägers bzw. der Trägerplatte angeordnet sein. Eine solche Ausbildung ist konstruktiv besonders einfach und stellt, da Kabineninnenräume in der Regel in Richtung der Kabinenlängsachse gleichmäßig ausgebildet sind, eine - insbesondere vom Herstellungsaufwand her betrachtet - vorteilhafte Ausbildung dar, gerade auch hinsichtlich der Möglichkeiten der Lagerung der Reinigungselemente, deren Funktion speziell durch die Ausbildung als Schabekanten sehr vorteilhaft erfüllt wird.

Die Reinigungselemente können zweckmäßigerweise als Schabelippen aus elastischem Material ausgebildet sein, wodurch sich, z.B. bei Verformungen der Kabineninnenwand, die Anpassung an Unterschiede in dem Arbeitsspalt besonders vorteilhaft erreichen läßt. Um dabei in jedem Falle einen Mindest-Arbeitsspalt zu gewährleisten und zu verhindern, daß z.B. bei einseitigen Öffnungen (Arbeitsöffnungen für Sprühgeräte, Absaugöffnungen o.ä.) der starre Träger einseitig auswandert und damit die Schabelippen in diesem Bereich zu eng an der solchen Öffnungen benachbarten Wandung anliegen und ihre Funktionsfähigkeit verlieren, können an dem starren Träger, aber auch an der Kabine, Distanzhalter angeordnet sein.

In bevorzugter Weiterbildung der Erfindung können die Schabelippen als gegen die Bewegungsrichtung schrägwinklig verlaufende Einzelelemente ausgebildet sein, die zueinander nach Art von Leitschaufeln versetzt und mit ihren jeweils benachbarten Begrenzungskanten einander in Bewegungsrichtung überlappend angeordnet sind. Durch diese Maßnahmen lassen sich u.a. hohe Pressungen, durch die sich die Kabinenbleche verformen würden, vermeiden, während sich zugleich infolge der Überlappung die Reinigungsfunktion vollständig und bestmöglich verwirklichen läßt. Zugleich ergeben sich durch die Schrägstellung der Lippen im Falle der Absaugung die für eine genügende Luftströmung ausreichenden Strömungsquerschnitte und -richtungen, wodurch zudem ein Anhaften von abgestreiftem Pulver an den Lippen verhindert wird, da die Luft gezielt im wesentlichen entlang der Schabekanten streicht. Ein besonders hoher Reinigungsgrad wird erzielt, indem man zweckmäßigerweise die Schabekanten/Schabelippen in zueinander in Bewegungsrichtung beabstandeter, hinsichtlich der Durchlässe zwischen den Einzelelmenten überlappender Doppelring- oder -kranzanordnung vorsieht, wodurch bei der Bewegung der Reinigungsvorrichtung durch die Kabine praktisch jede Stelle der zu reinigenden Wand doppelt von den Reinigungselementen überstrichen wird.

Aus Gründen einfacherer Herstellbarkeit können die Schabelippen als mindestens ein durchgehend umlaufender Kranz auf dem Träger angeordnet sein. Damit lassen sich besonders Reinigungsprozesse durchführen, bei denen glatte Kabinenwandungen abgereinigt werden sollen und keine Saugluft benötigt wird. Dabei können die Schäbekanten/Schabelippen derart an dem Träger angeordnet sein, daß sie in den beiden einander entgegengesetzten Bewegungsrichtungen der Reinigungsvorrichtung unterschiedlich hohe Anpreßkräfte gegen die Innenkontur ausüben. So kann in der einen, eine geringere Anpreßkraft begründenden Richtung die Vorrichtung zur Vorreinigung verwendet werden, während in der entgegengesetzten Richtung dann die Endreinigung mit höherer Anpreßkraft erfolgt. Auf die Weise kann man die Agglomeratbildung wirkungsvoll unterbinden. Ähnliche Ergebnisse erzielt man bei Doppelkranzanordnung der Schabelippen vorteilhaft durch Anordnung der Schabekanten/-lippen derart, daß die in Bewegungsrichtung der Reinigungsvorrichtung jeweils vorauslaufende Schabelippe mit einer geringeren Anpreßkraft auf die Innenkontur beaufschlagt ist als die jeweils nachlaufende Schabelippe. Dabei ist es besonders günstig, daß die Reinigungsvorrichtung zur Reinigung die Kabine nur einmal zu durchqueren braucht. Bei Einsatz von Saugluft zwischen den beiden Kränzen werden die Schabeelemente mit der geringeren Anpreßkraft, also die vorauslaufenden, leicht angehoben, so daß sich ein Spalt bildet, in den loses Pulver eingesaugt wird. Außerdem ergibt sich so eine Verbesserung der Strömungsverhältnisse in bezug auf die zweite, eigentliche Schabekante, indem die Luftgeschwindigkeit erhöht wird und die Strömung gezielt auf die zweite Schabekante wirkt. Besonders vorteilhaft ist es dabei, die Schabekanten/Schabelippen einseitig mit Abstandshaltern zur Erzeugung eines definierten Durchlasses zwischen den Schabekanten/Lippenrändern und der Innenkontur zu bestücken. Damit lassen sich die Strömungsverhältnisse sehr genau kontrollieren, und es wird eine noch intensivere Anströmung der zweiten Schabekante erreicht.

Es sei darauf hingewiesen, daß bei Doppelkranzanordnung der Reinigungselemente und Sauglufteinwirkung im Bereich von Öffnungen in den Kabinenwandungen die Schabelippen zusammenklappen können, wodurch ein Saugdruckabfall im außerhalb der Öffnungen selbstverständlich wirksamen Schabelippenbereich wirksam vermieden werden kann. Ebenso ist es natürlich möglich, Schabelippen in unterschiedlicher Stellung miteinander an einem Träger zu kombinieren, um unterschiedlichen Betriebszuständen und Konstruktionsdetails der verschiedenen Kabinenformen ausreichend Rechnung tragen zu können.

Vorteilhaft kann die Kabine nach der Erfindung mit einer mindestens eine Trägerplatte umfassenden Reinigungsvorrichtung ausgestattet sein, die von einer Kabineneintrittsöffnung her in die Kabine einfahrbar ist, wobei die Quelle des Absaugunterdrucks in Bewegungsrichtung vor der Trägerplatte wirksam angeordnet ist. Auf einer solchen Tragerplatte, die motorisch oder sonstwie betrieben durch die Kabine zu bewegen ist, lassen sich die Reinigungselemente in Form von Schabekanten/Schabelippen einwandfrei und in jeder gewünschten, zweckmäßigen Stellung anordnen. Die Platte bietet eine einfache Trennung des zu reinigenden Kabinenraumteils von dem gereinigten, wobei die Absaugung unmittelbar im Moment des Ablösens der Pulverteilchen durch die Reinigungselemente wirksam wird. Bei herkömmlichen Handkabinen-Anordnungen kann der Unterdruck mit Hilfe einer Absaugeinrichtung mit Filtrierung erzielt werden. Für solche Kabinen ist es in der Regel aus konstruktiven Gründen zweckmäßig, wenn die Trägerplatte auf einer im wesentlichen mittig an ihr angreifenden stangenförmigen Halterung sitzt und über diese motorisch bewegbar ist. Um während des Beschichtungsbetriebes der Kabine einen freien, ungehinderten Zugang zur Kabinenöffnung zu haben, kann die Trägerplatte im Bereich der Kabinenöffnung in ihrer Ruheposition ausschwenkbar gelagert sein. Selbstverständlich wird die Reinigungsvorrichtung bzw. die die Reinigungselemente tragende Platte in geeigneter Weise geführt, so daß der Arbeitsspalt gleichmäßig erhalten wird und ein kontinuierlich gleichmäßiges Arbeiten der Schabekanten sichergestellt ist.

Für Durchlaufkabinen ist es andererseits besonders zweckmäßig, wenn diese mit einer zweiteiligen Reinigungsvorrichtung ausgebildet sind, deren beide Teile von den Kabinenenden her aufeinander zu bewegbar angeordnet sind, wobei sich die Unterdruckquelle zwischen beiden Teilen befindet. Natürlich muß dabei, wie auch im Falle der vorstehend beschriebenen speziellen Handkabinen-Ausbildung, jegliche Öffnung, die einen Abbau des Druckgefälles in der Kabine herbeiführen könnte, genügend dicht verschlossen werden. Bei der zweiteiligen Reinigungsvorrichtung wird vorzugsweise die Unterdruckquelle als zentraler, sich im wesentlichen senkrecht zur Bewegungsrichtung erstreckender, die Kabinenabsaugung bildender Absaugschlitz vorgesehen. Die beiden Reinigungsvorrichtungsteile bewegen sich also auf diesen Schlitz zu.

Eine andere Anordnungvariante für ein solches Absaugsystem kann auch darin bestehen, daß die Kabine mit einem sich in Bewegungsrichtung der Reinigungsvorrichtung/Trägerplatte(n) erstreckender Absaugkanal im Kabinenboden ausgebildet ist, wobei die Trägerplatte(n) dichtend in diesen Absaugkanal hineinragt(en). Ein solches System ist im Hinblick auf die Gesamtfunktion der Pulver-Sprühkabine vorteilhaft, weil hier die Absaugung unter gleichzeitiger Ausnutzung der Schwerkraft erfolgen kann, insbesondere dann, wenn in weiterer Fortbildung der Erfindung der Absaugkanal mittig in einem sich gegen ihn schräg abfallend erstreckenden Kabinenboden angeordnet ist.

Bei einer anderen, vorteilhaften Ausführungsform der Erfindung, die besonders günstig für solche speziell als Durchlaufkabinen einsetzbaren Kabinenanordnungen anwendbar ist, die seitliche Öffnungen, z.B. für die Filtereinheiten, haben, ist die Reinigungsvorrichtung als Saugwand mit einem umlaufenden Ring oder Kranz von Reinigungselementen und sich mit ihr bewegender Unterdruckquelle unmittelbar hinter den Reinigungselementen ausgebildet. Hierbei wird also das von der Kabinenwandung abgelöste Material unmittelbar an die sich bewegende Trägerwand der Saugvorrichtung herangesaugt, ohne erst im Kabinenraum selbst in größerem Maße herumzuwirbeln. Eine solche Einrichtung ist hinsichtlich ihrer Wirkungsweise fortschrittlicher, allerdings im Durchschnitt etwas teuerer als das mit in bezug auf die Kabine quasi statischem Unterdruck (auf der in Bewegungsrichtung betrachteten Vorderseite der Trägerwände) arbeitende System, wie es weiter oben beschrieben wurde. Besonders zweckmäßig und wirkungsvoll läßt sich dieses Saugwandsystem dadurch realisieren, daß die Reinigungselemente in Doppelkranzanordnung vorgesehen sind und sich die Unterdruckquelle zwischen diesen Kränzen befindet. Hier handelt es sich also um eine Ausbildung, bei der die Unterdruckquelle zwischen den Schabelippen innerhalb der sich bewegenden Trägerwand angeordnet ist und das abgeschabte Material in den Raum zwischen den Reinigungselementen, also beispielsweise den Schabelippen, hineingesaugt wird. Solche Saugwände sind u.a. gerade auch für die Nachrüstung bestehender Anlagen mit Boden-Filterbandanordnung geeignet.

Eine Kabine, bei der das vorbeschriebene Saugwandsystem für die Reinigungsvorrichtung Verwendung findet, kann z.B. entweder mit einer Patronenfilterabsaugeinrichtung allein oder mit einer Flächenfiltereinrichtung ausgebildet sein, der eine Patronenfiltereinrichtung als Nachreinigungsmöglichkeit nachgeschaltet ist. Hier macht man sich wahlweise die Erkenntnis zunutze, daß sich mit Patronenfiltern große Fertigungslose mit einem hohen Rückgewinnungsgrad bearbeiten lassen, während bei Flächenfiltern, die insbesondere zum schnellen Farbwechsel (z.B. bei mittleren und kleineren Losgrößen zu beschichtender Teile und häufigen Farbwechsel) zweckmäßiger sind, im Hinblick auf deren geringeren Filterungsgrad Nachfilter eingeschaltet sein müssen, um die Umwelt zu schützen und auch für einen hinreichenden Arbeitsschutz zu sorgen. Es handelt sich also um unterschiedliche Möglichkeiten des Grundaufbaus der Kabine, die je nach deren Hauptverwendungszweck beim Anwender gewählt werden können und das erfindungsgemäße Reinigungssystem inkorporieren.

Da Flächenfilter wegen ihres beschränkten Wirkungsgrades relativ groß sein müssen, die Kabinenwand aber im Hinblick auf die erforderliche Filtergröße in der Regel nicht wesentlich vergrößert werden kann, ist es in verschiedenen Anwendungsfällen zweckmäßig, die Kabine mit einem Zweitabsaugkanalsystem, umfassend eine außerhalb der Kabine befindliche Filtereinrichtung, auszubilden. Die für die Kabine zur Verfügung stehende Gesamtluftmenge, die erforderlich ist, um das Pulver an die Filter zu fördern und es daran zu hindern, durch irgendwelche anderen Öffnungen aus der Kabine auszutreten und in die Umwelt zu gelangen, wird ebenso wie das gesamte Filtersystem geteilt, und zwar einerseits in ein in der Kabine befindliches Filtersystem in Form preiswerter Flächenfilter sowie einen Pulverteilchen zu diesem Filter führenden Luftstrom, und andererseits einen separaten zweiten Luftstrom mit einem außerhalb der Kabine befindlichen Filtersystem. Dieser zweite Luftstrom wird so geführt daß er Pulver, das von dem kabineninternen Reinigungssystem entfernt, also mit Hilfe der erfindungsgemäßen Reinigungsvorrichtung abgelöst wird, aufnimmt und zu einem externen Filtersystem, das beispielsweise ein Abscheider (Zyklon) sein kann, führt, wo das Pulver abgereinigt und in einen Pulverbehälter zur Wiederverwendung geleitet wird.

Besonders zweckmäßig ist es, wenn das Zweitabsaugkanalsystem als im Bodenbereich der Kabine angeordnete Rinne vorgesehen ist, die unterhalb des Wirkbereichs der Filter liegt. Damit ist es möglish, von den Filtern abfallendes bzw. durch gesonderte, zu diesem Zweck geeignete Vorrichtungen abgereinigtes Pulvermaterial direkt weg- und einer Auffangvorrichtung, z.B. in Form eines Pulverbehälters, ohne die Gefahr eines Vagabundierens im Kabineninnenraum zuzuführen.

Ein weiterer, erheblicher Vorteil eines solchen Zweitabsaugungssystems besteht darin, daß man nur einen zentralen Pulverbehälter für alle Filtereinheiten benötigt. Mit anderen Worten kommt man auch bei Reihenanordnung mehrerer Kabineneinheiten mit einem einzigen Pulverbehälter aus.

In konstruktiv besonders zweckmäßiger Ausbildung der Erfindung kann die Saugwand mittels eines im Deckenbereich der Kabine außerhalb derselben vorgesehenen Antriebs bewegbar gelagert und ihr dort ein Absaugkanal zugeordnet sein. So läßt sich das Saugwand-System ohne besondere, aufwendige konstruktive Maßnahmen einfach auch in Kabinen herkömmlicher Anordnung integrieren. Um mit möglichst wenig zusätzlichen Teilen auszukommen und eine konstruktiv einfache und sinnvolle Anordnung zu schaffen, kann der Antrieb als getriebener Zahnriemen ausgebildet und derart über dem Absaugkanal angeordnet sein, daß der Riemen den bei Bewegung der Saugwand jeweils freiliegenden Bereich eines Lufteintrittsschlitzes des Kanals dichtend abdeckt.

Zur Erfüllung ihrer Funktion in einfacher, sinnfälliger Weise wird die Saugwand vorzugsweise als Hohlwand mit entsprechenden Lufteintrittsöffnungen im unmittelbaren Bereich der Reinigungselemente/Schabekanten/Schabelippen ausgebildet.

Bei einer weiteren vorteilhaften Ausführungsform der Erfindung kann die Saugwand mit einem sich im wesentlichen über ihre Gesamtfläche erstreckenden flächigen (Flach-) Filter ausgerüstet und das Zweitabsaugungkanalsystem als schmaler umlaufender Kranz oder Ring angeordnet sein. Damit erhält man in kostruktiv relativ einfacher Weise eine bewegliche Filteranordnung, die variabel für Hand- und Durchlaufkabinen einsetzbar ist. Ein solches verfahrbares Flachfilter ist besonders günstig zu reinigen, da die saugwand bis zur Öffnung vorgefahren werden kann und das Bedienungspersonal deshalb nicht in den Innenraum der Kabine zu treten braucht. Außerdem kann das flächige Filter vorzugsweise mit einer Filterreinigungsvorrichtung ausgerüstet sein, um im Dauerbetrieb für eine hinreichende Filtereffektivität zu sorgen. Eine solche Filterreinigungsvorrichtung kann beispielsweise eine die Filterrückseite parzellenartig beaufschlagende Drucklufteinrichtung mit ggf. stufenweise entlang der Filterrückseite verfahrbaren und diese entgegen der Filterrichtung beaufschlagenden Druckluftdüsen sein. Auf jeden Fall ist darauf zu achten, daß das Zweitabsaugkanalsystem bei dieser Saugwandanordnung nur als relativ schmaler Ring vorgesehen wird, um den Strömungsquerschnitt hinter dem Filter und eine hier vorgesehene Reinigungsvorrichtung für das Flachfilter nicht zu beeinträchtigen. Das Zweitabsaugkanalsystem ist also in diesem Falle in die Saugwand integriert und bildet nur einen Außenring, der zugleich die mechanische Halterung für das Filter darstellt. Dabei sollte darauf geachtet werden, daß der Saugkanal im Bereich des Arbeitsspalts auf der den Schabelippen gegenüberliegenden Seite durch eine hinreichende Dichtung, beispielsweise in Form einer elastischen umlaufenden Dichtlippe, gegen den freien Durchtritt von mit Pulver angereicherter Luft abgedichtet ist.

Nach einer anderen Weiterbildungsform der Erfindung kann die Kabine mit einer Abreinigungsvorrichtung für die Reinigungselemente bzw. Schabelippen in Form einer Druckimpuls-Beaufschlagungseinrichtung ausgebildet sein, die wiederum als ein um die Kabinenöffnung umlaufender, entsprechend den Reinigungselementen/Schabelippen sich erstreckender und gegen diese offener Druckluftkanal vorgesehen sein kann. Dabei sollte zweckmäßigerweise die Öffnung des Druckluftkanals im wesentlichen der Dimension des Arbeitsspaltes entsprechen, wodurch sich eine günstige Dichtmöglichkeit und Kanaleinbeziehung dadurch ergibt, daß der Druckluftkanal in vorderster Position der Reinigungsvorrichtung mit deren Träger dichtend derart abschließen kann, daß er ausschließlich die Reinigungselemente/Schabelippen beaufschlagt. Alles in allem läßt sich also an der Kabine für die Reinigungselemente eine funktionsfähige, ein manuelles Abreinigen der Reinigungselemente/Schabelippen überflüssig machendes Reinigungssystem für diese vorsehen, das ohne wesentlichen konstruktiven Mehraufwand unter Berücksichtigung und/oder Einbeziehung aller übrigen, von der Erfindung vorgesehenen Maßnahmen zu realisieren ist.

Wenn es, wie bereits erwähnt, beim Reinigen der Kabine nicht auf die Rückgewinnung von Pulver ankommt, weil eine solche Rückgewinnung zu zeit- und/oder kostenaufwendig wäre, indem neben der Kabine noch die Reinigungsvorrichtung selbst gereinigt werden muß, kann es z.B. bei häufig erforderlichen Farbwechseln besonders wirtschaftlich und damit vorteilhaft sein, die Reinigungsvorrichtung einerseits als Saugwand auszubilden und sie andererseits mit einem von dem der Kabine zugeordneten Pulverrückgewinnungsabscheider/-filter unabhängigen Sammelfilter zu verbinden. Mit anderen Worten wird das in diesen Sammelfilter gelangende abgereinigte Pulver nicht mehr dem Pulverkreislauf bzw. der Wiederverwendung zugeführt.

Die insgesamt mit der Erfindung erzielbaren Vorteile bestehen in einer wirtschaftlich durchführbaren Art der Reinigung sowohl von Hand- als auch von Durchlaufkabinen auf automatischem Wege, was das Betreten der Kabine zu Reinigungszwecken durch das Personal überflüssig macht und zugleich in vielen Fällen ein Optimum an rückgewonnenem Pulvermaterial sicherstellt.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt
- Fig. 1: eine Hand-Pulverbeschichtungskabine in Vorderansicht mit ausgefahrener Reinigungsvorrichtung in ausgeschwenkter Ruheposition,
- Fig. 2: eine teilgeschnittene Seitenansicht der Handkabine der Fig. 1 mit in Betriebsstellung befindlicher Reinigungsvorrichtung,
- Fig. 3: eine Einzelheit einer Schabelippenanordnung gemäß Pfeil III der Fig. 2 in vergrößerten Maßstab,
- Fig. 4: in geschnittener Seitenansicht eine Durchlaufkabine mit zweiseitiger Reinigungsvorrichtung und zentralen Absaugschlitz,
- Fig. 5: einen Querschnitt der Kabine im Bereich des Absaugschlitzes gemäß V-V der Fig. 4,
- Fig. 6: im Längsschnitt eine abgewandelte Ausführungsform einer Durchlaufkabine mit im Bodenbereich angeordnetem, sich längs erstreckenden Absaugkanal,
- Fig. 7: einen Querschnitt durch eine Kabine gemäß VII-VII der Fig. 6,
- Fig. 8: im vergrößerten Maßstab ein Detail des Absaugkanals der Kabine der Fig. 6 und 7 entsprechend Pfeil VIII,
- Fig. 9: einen Querschnitt - mit teilweisen Ausschnitt - durch eine Durchlaufkabine mit einer abgewandelten Ausführungsform einer erfindungsgemäßen Reinigungsvorrichtung sowie mit einer Patronenfilter-Reinigung, einerseits, im rechten Teil (Fig. 9a), und mit einer kombinierten Flach- und Patronenfilteranordnung, andererseits, im linken Teil (Fig. 9b), sowie mit einem Zweitabsaugkanal, insgesamt,
- Fig. 10: ein Detail des oberen Teils gemäß Pfeil X der Fig. 9 in vergrößerten Maßstab,
- Fig. 11: in vergrößertem Maßstab ein Detail gemäß Schnitt XI-XI der Fig. 9,
- Fig. 12: in vergrößerten Maßstab eine Teil-Draufsicht auf die Reinigungsvorrichtung der Fig. 9 unter Weglassen von für das Verständnis der Funktion überflüssigen Bauteilen,
- Fig. 13: in vergrößerten Maßstab eine Seitenansicht der Lagerung der Reinigungsvorrichtung der Fig. 9 an einer Bewegungseinrichtung in Seitenansicht,
- Fig. 14: im Längsschnitt eine abgewandelte Ausführung einer Reinigungsvorrichtung in einer Durchlaufkabine mit Flachfilteranordnung und Zweitkanalabsaugung,
- Fig. 15: die Kabine der Fig. 14 bei in Ruheposition befindlicher Reinigungsvorrichtung in Ansicht von außen,
- Fig. 16: eine Kabine ähnlich der Fig. 14, jedoch mit zwei Reinigungsvorrichtungen,
- Fig. 17: einen Querschnitt durch eine Kabine in einer Ausführungsform einer Reinigungsvorrichtung mit in eine Saugwand integrierter Zweitabsaugung und damit beweglichen Flächenfilter sowie Patronenfilter-Nachreinigung mit Pulverabfallbehälter,
- Fig. 18: ein Detail der Fig. 17 entsprechend den Pfeil XVIII in vergrößerten Maßstab,
- Fig. 19: ein Detail ähnlich Fig. 18, jedoch in vorderer Stellung der beweglichen Reinigungsvorrichtung mit einer zusätzlichen Abreinigungsmöglichkeit für von der Reinigungswand getragene Schabelippen,
- Fig. 20: in Schnitt eine Doppelkranzanordnung von durchgehend umlaufenden Schabelippen im Eingriff,
- Fig. 21: die Schabelippen der Fig. 20 bei Überlaufen einer Öffnung in der Kabinenwandung und
- Fig. 22: eine Variante der Schabelippen-Ausbildung der Fig. 20.

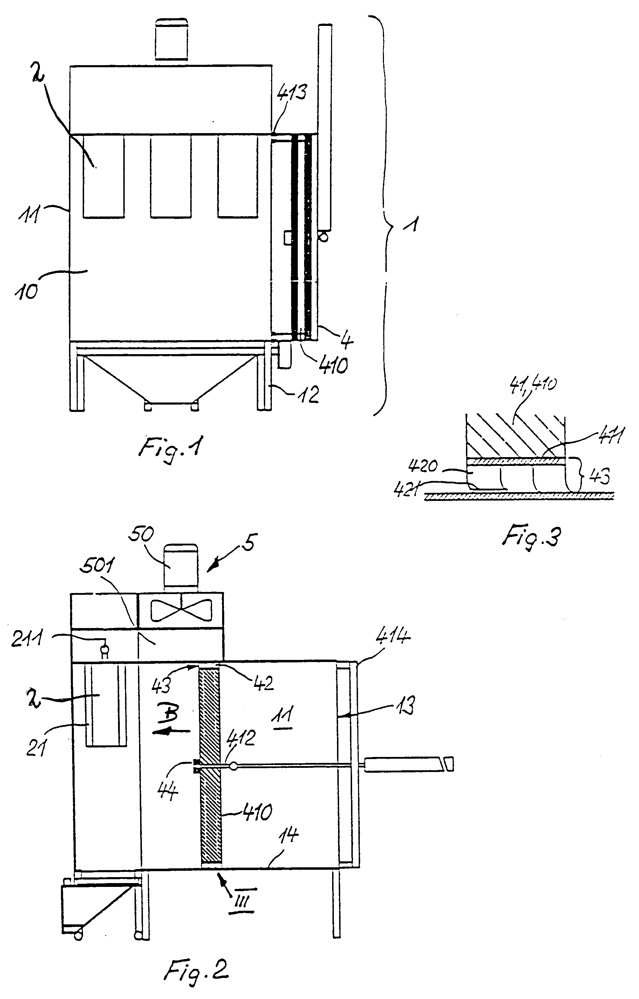

Eine in Fig. 1 und 2 gezeigte Kabine 1 für die Pulverbeschichtung bestimmt einen Kabineninnenraum 10, der von einer Wandung 11 und Kabinendecken 16 aus stabilem Wandungsmaterial, u.a. üblicherweise Aluminium- oder Stahlblech, vorzugsweise Edelstahlblech od.dgl. dichtend umschlossen ist. Die Kabine 1, die hier als Hand-Beschichtungskabine ausgebildet ist, ruht auf einen unterhalb eines Kabinenbodens 14 vorgesehenen stabilen Traggestell 12 und weist eine vorderseitige Öffnung 13 auf, von der aus in den Kabineninnenraum eingebrachte Gegenstände mit herkömmlichen Spritspistolen, die der Übersichtlichkeit halber ebenso wenig wie die zu beschichtenden Gegenstände selbst dargestellt sind, beschichtet werden. An der Rückseite der Kabine 1 befindet sich ein Filter-Gehäuseabschnitt mit einer Anordnung von Filtern 2, die hier als Patronenfilter 21 vorgesehen sind. Um überschüssiges, d.h. sich nicht auf der Oberfläche des zu beschichtenden Werkstückes ablagerndes Beschichtungsmaterial an die Patronenfilter 21 heranzuführen, ist die Filteranordnung 2 mit einer Absaugung 5 verbunden, die hier ein - zweistufiges - Absauggebläse 50 mit einem den Patronenfiltern 21 zugeordneten Kanalsystem 501 umfaßt. Die abgesaugte, in dem Filter von überschüssigem Pulver gereinigte Luft kann, sofern der Reinigungsgrad ausreicht, an die Umluft abgegeben werden, während bei möglicherweise ungenügender Reinigung der Luft ein Nachfilterungssystem angeordnet werden kann bzw. muß. Für am Filter abgeschiedenes Pulver ist ein Pulverauffangbehälter 6 vorgesehen. In einfachsten Falle erfolgt die Rückförderung des an den Filtern 21 abgelagerten Pulvers durch eine Druckbeaufschlagung über Druckluftanschlüsse 211, so daß das Pulver in den darunter angeordneten Auffangbehälter 6 herabfallen kann.

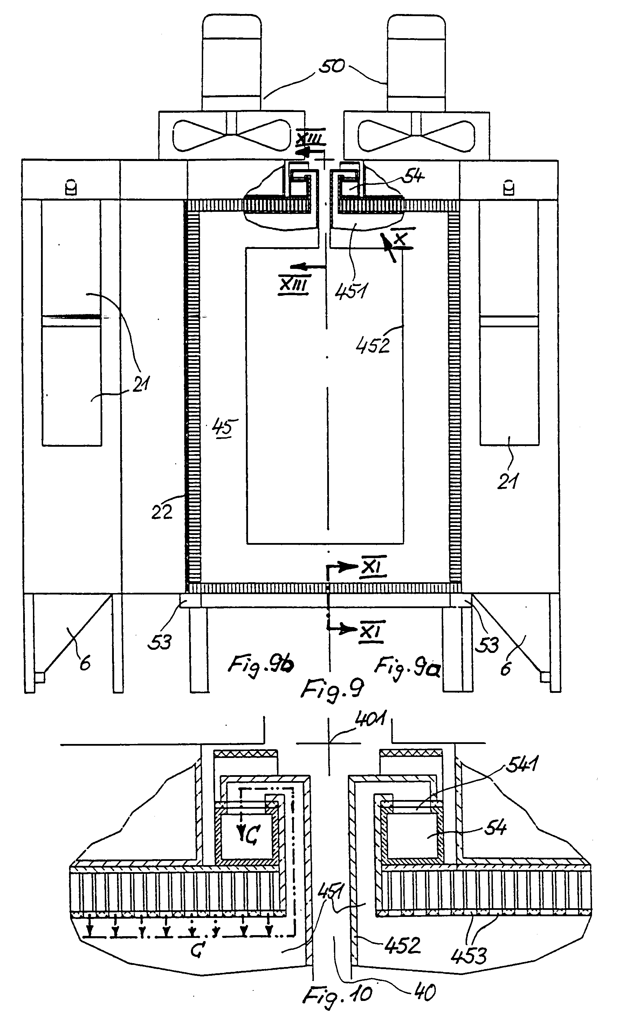

Die Luftreinigung kann aber auch ebensogut, wie in weiteren, folgenden Ausführungsbeispielen gezeigt, durch Flächenfilter 22 (Fig. 9b), Abscheider in Form von Zyklonen, die hier nicht gezeigt sind, Zweitabsaugkanäle 53 (Fig. 9) mit externen Filtern sowie Kombinationen solcher oder ähnlicher Filter- und/oder Abscheideanordnungen erfolgen. Die Wahl derartiger Baueinheiten richtet sich ganz nach dem Verwendungszweck der Kabine. Hierauf braucht aber, da es sich um übliche Maßnahmen handelt, an dieser Stelle nicht näher eingegangen zu werden.

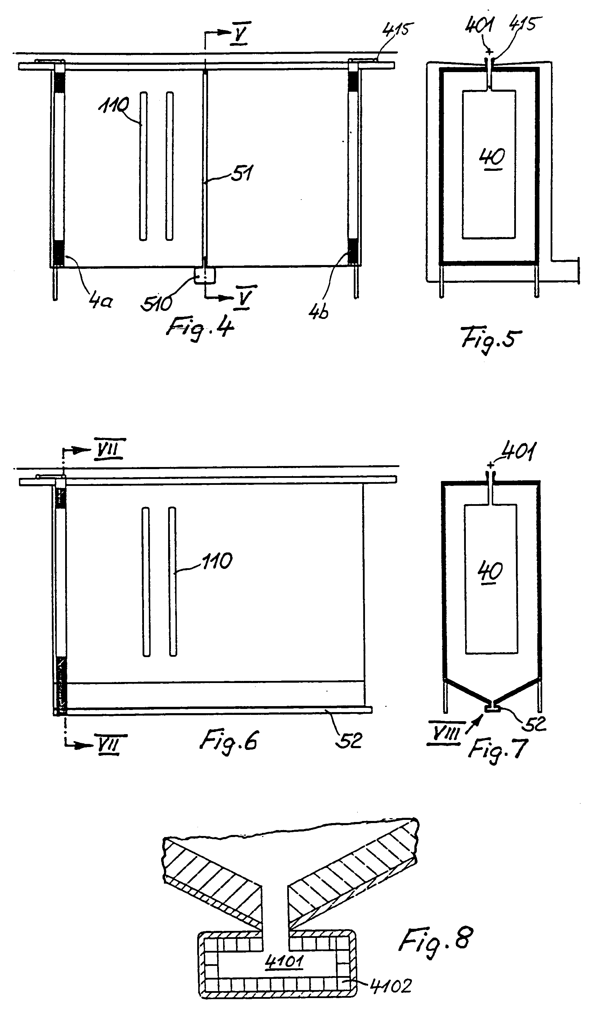

Maßgeblicher Gedanke der vorliegenden Erfindung ist die Verwirklichung eines Reinigungssystems für die Kabine bei Farbwechsel und/oder nach Beschichtung einer bestimmten Anzahl von Werkstücken, wobei es vor allen Dingen darauf ankommt, die Leerlaufzeiten zu reduzieren und die Kabine möglichst schnell wieder einsatzfähig zu machen. Zu diesem Zweck ist eine Reinigungsvorrichtung 4 vorgesehen, die im Falle der Hand-Beschichtungskabine 1 der Fig. 1 und 2 einteilig vorgesehen ist. Sie umfaßt einen Träger 41, der an einer Halterung 412, die notorisch betrieben wird, gelagert ist. Der Träger 41 ist in geeigneter, hier aber nicht näher zu beschreibender Weise lagesicher geführt und weist als ein wesentliches Bauelement eine Trägerplatte 410 auf, deren Kontur bzw. Rand 411 der Querschnittsform des Kabineninnenraums 10 angepaßt ist. Der Rand 411 beläßt zur Innenwand einen Arbeitsspalt 43. Dieser Arbeitsspalt wird von Reinigungselementen 42 ausgefüllt bzw. überbrückt, bei denen es sich um elastische, an der Trägerplatte in geeigneter Weise gelagerte Schaber 420 handelt, die mit Schabekanten oder Schabelippen 421 ausgestattet sind. Im Detail erkennt man diese Elemente in Fig. 3, Fig. 11 und Fig. 20-22.

In Fig. 1 ist die Reinigungsvorrichtung 4 in Ruheposition gezeigt, indem der Träger 41, also die Trägerplatte 410 mit ihrer Halterung 412, aus der Kabine gezogen und mit Hilfe eines Gelenklagers 413 ihrer Aufhängung 414 aus der Öffnung 13 der Kabine um 90° herausgeschwenkt ist, so daß die Kabine zur Durchführung der Handbeschichtung von der Öffnung 13 her freigegeben ist.

Um den Kabineninnenraum 10, also insbesondere die Wandung 11 zu reinigen, wird, wie aus Fig. 2 erkennbar, die Trägerplatte 410 zunächst vor die Öffnung 13 geschwenkt und dann mittels des Antriebs in den Kabineninnenraum eingefahren. Dabei wird durch das Absauggebläse 50 in Bewegungsrichtung B vor der Trägerplatte 410 ein Unterdruck erzeugt, während hinter der Trägerplatte Normaldruck besteht. Die Schabelippen 421 heben bzw. streifen an der Kabinenwand 11 befindliches Pulver ab. Durch diesen mechanischen Ablösungsvorgang wird die elektrostatische Aufladung des Pulvers beseitigt und dieses allein durch den von Absauggebläse 50 erzeugten Unterdruck in Richtung auf das bzw. die Patronenfilter 21 hin transportiert.

Die Schabelippen 421 sind bei den Detail-Ausführungsformen der Fig. 3, 11 und 20-22 in Form von zwei Kränzen auf dem Umfang der Trägerplatte 410 angeordnet, jedoch kann ebensogut ein einfacher Kranz, wie z.B. in Fig. 19, oder eine Mehrfach-Kranzanordnung vorgesehen sein, je nachdem, welche Konstruktion die Kabine hat und welche Anforderungen an die Reinigung gestellt sind. Das Prinzip dieser Reinigung ist das eines Fensterputzgummis, ohne daß allerdings die Schabelippen außer dem Abstreifen des Pulvers irgendeine Transportfunktion haben. Vielmehr wird dieser Transport von der Saugluft übernommen, so daß lediglich geringe Pressungen gegen die Kabinenwand nötig sind. Toleranzen in der Kabine sind durch die Elastizität der Schabelippen und deren Länge ausgleichbar.

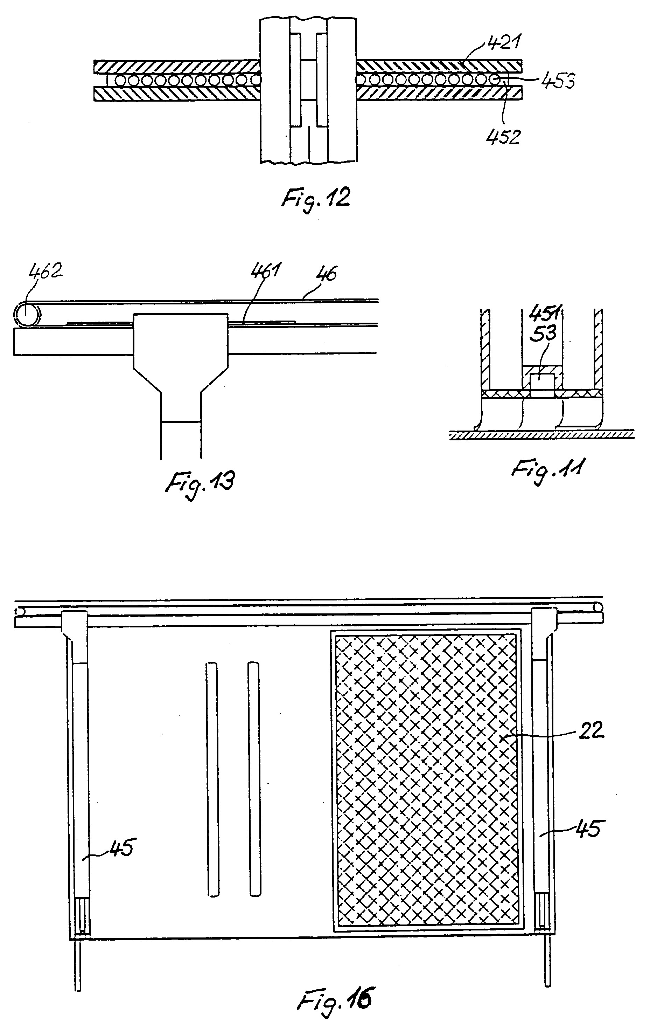

Die Schabelippen können, wie aus den Beispielen der Fig. 3, 9 bis 12 und 19 hervorgeht, als Einzelelemente im Kranz angeordnet sein. Bei dieser Einzelelenentausbildung erhöht eine Überlappung der Lippen, die man beispielsweise und vorteilhaft durch eine Schrägstellung in Bezug auf die Bewegungsrichtung B des Trägers erzielen kann - wie dies in Prinzip aus Fig. 12 hervorgeht - , den Reinigungseffekt. In gleicher Weise kann sich eine Doppel- oder Mehrfachkranzanordnung auswirken. Weiterhin kann durch eine geringe Lippenbreite die Anpassung an Unebenheiten im Kabinenblech, die in Betrieb leicht einmal auftreten, verbessert werden.

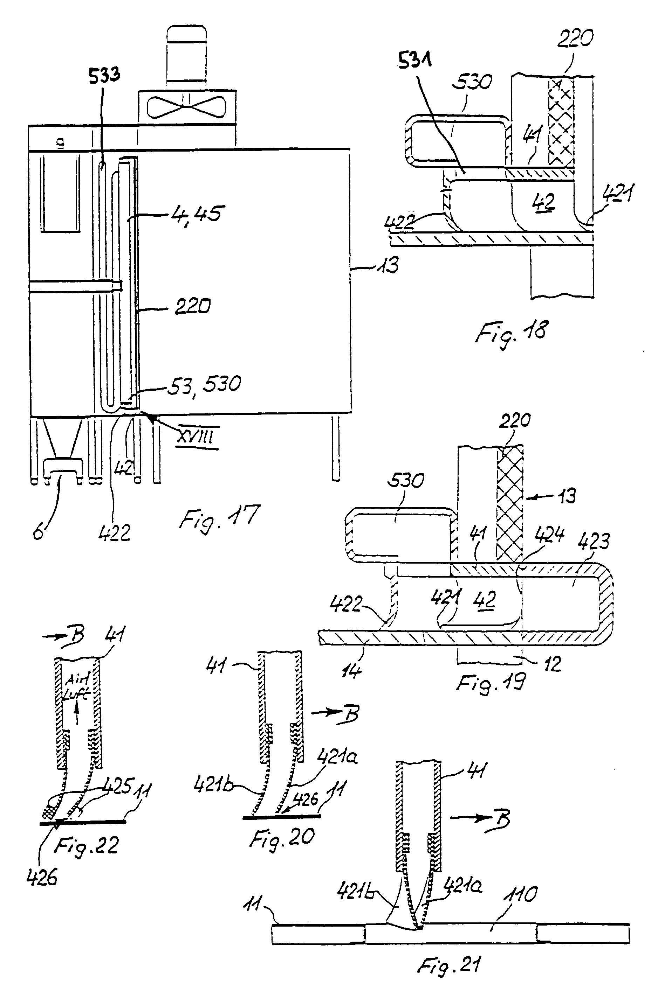

Für andere Anwendungsfälle, die noch beschrieben werden, ist - im Gegensatz zu den Einzelelementen der Fig. 3, 9-12 und 19 - im Einzel- oder Mehrfachkranz eine durchgehend umlaufende Anordnung von Schabelippen 421 vorgesehen, wie dies aus Fig. 20-22 hervorgeht.

Das Prinzip des Abstreifens von auf den Kabinenwänden abgelagertem überschüssigem Pulver mit Hilfe der Schabeelemente, Schabekanten oder Schabelippen und die Entfernung dieses abgestreiften Pulvers mit Hilfe von Saugluft wird in der für die Kabinenausführung der Fig. 1 und 2 beschriebenen Weise auch bei anderen Ausführungsformen, die im folgenden erläutert werden, realisiert, so daß auf dieses Prinzip nicht bei jedem einzelnen Ausführungsbeispiel nochmals detailliert eingegangen zu werden braucht.

Um bei Verwendung anderer Filter als der Patronenfilter 21, also z.B. bei Einsatz von Zyklonen, auch eine deren Gehäuseabschnitt begrenzende Stirnwand und außerdem zugleich die Frontseite der Trägerplatte 410 abreinigen zu können, ist an dieser eine Rotations-Sprühdüse 44 vorgesehen, deren Sprühwirkung in Verbindung mit dem Sauggebläse ausreicht, um das in diesen Bereich nur relativ lose anhaftende, in geringerem Maße als in der Hauptkabine vorhandene Pulver zu entfernen.

Statt der Anordnung von Patronenfiltern mit Sauggebläse für die Absaugung des Pulvers kann die Kabine auch mit einem Zyklon-Abscheider ausgerüstet sein, der hier aber nicht näher erörtert werden braucht, da seine Anordnung und Verwendung in Stand der Technik hinreichend bekannt ist.

Für Durchlaufkabinen eignet sich besonders eine in Fig. 4 und 5 gezeigte zweiteilige Ausbildung der Reinigungsvorrichtung 4 mit Vorrichtungsteilen 4a und 4b. Diese beiden Reinigungsvorrichtungsteile werden von den Enden der gezeigten Durchlaufkabine 1 her gegen einen zentralen Absaugschlitz 51 bewegt, der hier die Unterdruckquelle bildet. Um den nötigen Reinigungseffekt zu erzielen, müssen natürlich die bei einer Durchlaufkabine offenen Zu- und Ausgangsöffnungen 13 geschlossen werden, wobei zu diesem Zweck geeignete Abschottungsmaßnahmen vorgesehen werden. Der zentrale Absaugschlitz 51 mündet in einen Ahsaugkanal 510, der zu einem Pulverabscheider und zum Farbauffangbehälter (hier nicht dargestellt) führt.

Die Reinigungsvorrichtung ist hier, in geeigneter Weise getrieben, auf Rollen 415 im Oberbereich der Kabine außerhalb des Kabineninnenraumes gelagert. Man erkennt weiter Schlitze 110 in der Kabinenwandung 11; durch diese Schlitze sind Pistolen für die Automatikbeschichtung einführbar. Auch diese Schlitze müssen im Zuge der Reinigung der Kabine durch jeweils geeignete Mittel verschlossen werden, um einen Abbau des Unterdrucks auszuschließen.

In Fig. 6 und 7 ist eine der Ausführung der Fig. 4 und 5 ähnliche Durchlaufkabine 1 gezeigt, die jedoch nur mit einer Reinigungsvorrichtung 4 ausgerüstet ist. Der wesentliche Unterschied besteht darin, daß der Kabinenboden 14 zur Mitte hin geneigt ist und hier in einem Absaugkanal 52 endet, der sich in Längsrichtung der Kabine über deren gesamte Länge erstreckt. Dieser Kanal 52 ist wieder in geeigneter Weise mit einem nicht näher dargestellten Abscheider und Pulverauffangbehälter verbunden.

Im Detail ist die Anordnung dieses Kanals 52 am Kabinenboden in Fig. 8 erkennbar. In diesen Kanal greift die Trägerplatte 410 der Reinigungsvorrichtung unter entsprechender Profilierung ein. Die Ränder dieses profilierten Trägerplattenteils 4101 sind mit elastischen Dichtelementen 4102 bestückt, um bei Betrieb der Reinigungsvorrichtung 4 den Absaugkanal zur Normal- bzw. Überdruckseite hin zu verschließen. Durch die Reinigungsvorrichtung von den Kabinenwänden abgestreiftes Material wird durch diesen Absaugkanal 52 kontinuierlich abgesaugt, wobei die Schwerkraft mitwirkt, zudem unter Ausnutzung der geneigten Ausbildung des Kabinenbodens 14. Mit anderen Worten dichtet also die Trägerplatte im Kanalbereich zwischen Normal- und Unterdruck, so daß über den Absaugkanal kein direkter Luftfluß zwischen diesen beiden Druckbereichen stattfinden kann, sondern das abgestreifte Material in den Kanal fällt und der Rückgewinnung zugeführt werden kann.

Natürlich können die Dichtelemente 4102 auch als Abstreifer ausgebildet sein, um eine eventuelle Resthaftung von Pulvermaterial im Kanalbereich sogleich zu beseitigen, oder es wird eine kombinierte Anordnung von Schabelippen und Dichtelementen vorgesehen.

In Fig. 9 ist eine Variante des erfindungsgemäßen Reinigungssystems dargestellt, und zwar in zwei verschiedenen Ausführungsformen des Kabinenaufbaus hinsichtlich der Filterung, von denen die eine im rechten Teil (Fig. 9a) und die andere im linken Teil (Fig. 9b) gezeigt ist. So ist in Fig. 9a eine Filterung mittels Patronenfilter 21 dargestellt, und zwar in Verbindung mit einem weiter oben bereits beschriebenen Absauggebläse 50. In Fig. 9b hingegen ist ein Flächenfilter 22 in der Kabinenwand angebracht, hinter dem sich zur Nachreinigung in einem entsprechenden Gehäuseabschnitt ein Patronenfilter 21, ebenfalls mit einem Absauggebläse 50 gekoppelt, befindet. Unter diesen Patronenfiltern 21 beider Ausführungsvarianten sind Pulveraufnahmen 6 in Form geeigneter Behälter angeordnet.

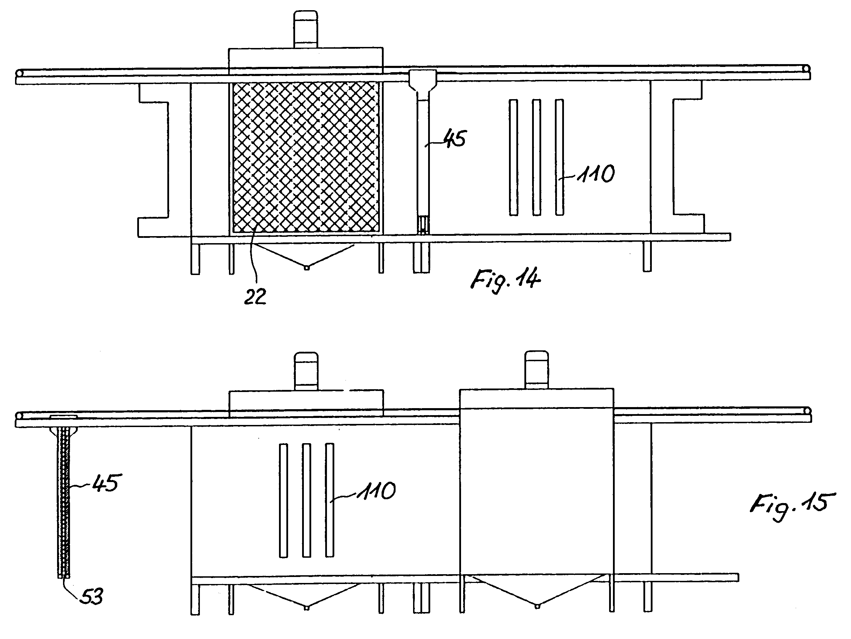

Wie man aus Fig. 9, insbesondere in Verbindung mit der Detaildarstellung der Fig. 11 und 12, erkennt, ist bei dieser Ausführungsform der Reinigungsvorrichtung 4 der Träger 41 als Saugwand-Hohlkörper 45 ausgebildet, der eine zweifache Anordnung von Schabelippen 421 trägt. Zwischen den beiden Schabelippen-Kränzen befindet sich ein umlaufender Saugkanal 451. Dieser Saugkanal steht mit einem auf der Kabinenoberseite angeordneten Absaugkanal 54 in der in Fig. 10 gezeigten Weise in Verbindung, wobei dieser Absaugkanal 54 im Deckenbereich der Kabine außerhalb des Kabineninnenraumes angebracht ist. Der aus Profilmaterial ausgebildete Absaugkanal 54 ist, wie Fig. 10 zu entnehmen ist, in geeigneter Weise in die Lagerung des Hohlkörpers 45 integriert. Über Träger 452 ist die Saugwand 45 gleitend auf der durchgehend mit einem Lufteintrittsschlitz 541 versehenen Oberseite des Absaugkanals 451 gelagert verbunden. Die Saugwand 45 ist mit einem Zahnriemen-Antrieb 46, der über Umlenkrollen 462 am Ende umläuft (Fig. 13), verbunden und wird von diesem bewegt. Die Befestigung an diesem Zahriemen 46 erfolgt über eine Halteplatte 461, und das Riemenband des Zahnriemens 46 deckt mit Ausnahme des Kaltebereiches für die saugwand den Lufteintrittsschlitz 541 des Absaugkanals über dessen gesamte Länge ab. Zwischen den beiden Kränzen der Reinigungselemente 42/421 befinden sich in der Randfläche des Hohlkörpers 45 Löcher 453, durch die abgestreiftes Pulvermaterial durch die Saugwirkung in das Innere des Hohlkörpers 45 und dort auf dem durch den Pfeil C der Fig. 10 angedeuteten Weg (doppelt strichpunktierte Linie) in den Absaugkanal 54 gelangen kann, über den es dann zum Abscheider und Pulversammelbehälter transportiert wird.

Ein solches Reinigungssystem mit Saugwand ist besonders günstig in solchen Fällen einsetzbar, in denen, wie in Fig. 9 angedeutet, in der Kabinenwand seitliche Öffnungen für Filtereinheiten wie Flächenfilter vorgesehen sind.

Fig. 9 zeigt außerdem eine Variationsmöglichkeit hinsichtlich der Absaugung von während der Beschichtung nicht von den zu beschichtenden Werkstücken aufgenommenem Pulvermaterial. Zu diesem Zweck ist ein Zweitabsaugkanal 53, hier in den Eckbereichen des Kabinehbodens 14, vorgesehen, der sowohl während des Hauptbetriebes der Kabine, also während der Beschichtung, als auch bei der Abreinigung mit Hilfe der Reinigungsvorrichtung 4 herabfallendes Material aufnehmen kann. Zu diesem Zweck ist der Zweitabsaugkanal 53 mit einem Unterdruck erzeugenden Aggregat außerhalb der Kabine, beispielsweise einem Zyklon, verbunden. Der Gesamtstrom der Abluft ist somit in zwei Luftströme aufgeteilt, wobei ein Luftstrom im Beschichtungsbetrieb durch die Filterelemente und bei der Reinigung durch den Absaugkanal 54 im Deckenbereich aus der Kabine geführt wird, während der andere Luftstrom über den Zweitabsaugkanal 53 beim Beschichtungsbetrieb insbesondere in den unteren Eckbereichen vagabundierendes Pulver oder beim Reinigungsbetrieb das von den Filtern abgeschiedene, herabgefallene Pulver zu einem außerhalb der Kabine angeordneten Pulverbehälter transportiert, wobei dort eine zusätzliche Filterfläche zum Trennen von Pulver und in die Umgebung abzuführender Luft vorgesehen ist. Der Vorteil einer solchen Absaugstrom-Aufteilung ist, daß Flächenfilter, um eine hinreichende Reinigungsleistung zu erzielen, sehr groß ausgebildet sein müssen, in der Regel aber die Kabinenwand im Hinblick auf die dann erforderliche Filtergröße nicht wesentlich vergrößert werden kann. Durch die Möglichkeit der Anordnung eines oder mehrerer externer Filter kann so in einfacher Weise die gegenüber Patronenfiltern geringere Abscheideleistung von Flächenfiltern ausgeglichen werden. Ein weiterer Vorteil ist darin zu sehen, daß man ggf. nur einen einzigen zentralen Pulverbehälter für alle Filtereinheiten benötigt, d.h. man kommt auch bei einer Reihenanordnung mehrerer Kabineneinheiten mit einem zentralen Pulverbehälter aus, und die heute üblichen und bekannten Transportvarianten wie Rüttelboden in der Kabine, Fluidboden, Transport mittels Injektoren etc. werden damit überflüssig.

Eine die Saugwand inkorporierende Ausführung einer Durchlaufkabine ist in Fig. 14 und 15 dargestellt, wobei Fig. 14 die Saugwand 45 im Betrieb und Fig. 15 dieselbe in Ruheposition zeigt. Auch hier ist ein Zweitabsaugkanal 53 vorgesehen, und zwar in Kombination mit zwei über die Länge der Kabine verteilten Flächenfiltern.

Fig. 16 zeigt eine Variante einer Durchlaufkabine mit zwei saugwänden in einer Anordnung ähnlich der Fig. 4 für eine Unterdruckwand.

Bei der in Fig. 17 gezeigten Ausführungsform ist die Saugwand 45 als Kombination einer Zweitkanalabsaugung in Form eines ring- oder kranzförmig umlaufenden Zweitabsaugkanals 530 mit einem dadurch beweglichen Flächenfilter 220 versehen. Bei dieser Anordnung wird also einerseits die Saugwand als Träger für das Flächenfilter in seiner Arbeitsposition benutzt, und andererseits wird funktionsgemäß die saugwand zum Abreinigen der Kabineninnenwandungen verwendet. Da die saugwand bis zur Kabinenöffnung 13 ausgefahren werden kann, ist es leicht möglich, beim Reinigen der Kabine das Flächenfilter in einer Position zu säubern, die das Eintreten von Bedienungspersonal in die Kabine überflüssig macht. Die Fläche der Saugwand hinter dem Flachfilter 220 ist praktisch frei, d.h. der Träger 41 ist keine durchgehende Platte (wie in anderen Ausführungsbeispielen), sondern er stellt ein Rippenbauteil o.ä. dar, so daß der durch das Filter hindurchtretende Luftstrom nicht beeinträchtigt wird. Der Zweitabsaugkanal 530 , auf dem die Schabelippen, kombiniert mit einer ausreichenden Dichtung, sitzen, ist also praktisch nur im Konturenbereich der Saugwand vorhanden und bildet die umlaufende Basis für die Reinigungselemente. Mit dieser Form der Ausbildung der Saugwand ist es möglich, Kabinen wahlweise als Hand- oder Durchlaufkabinen zu betreiben. In letzterem Fall wird die Saugwand quer zur Werkstückförderrichtung bewegt.

In Fig. 18 ist das Detail der Reinigungsvorrichtung 4 der Fig. 17 im unteren Bodenbereich erkennbar. Dabei ist hinter der Schabelippe 421 des Reinigungselements 42 eine Dichtlippe 422 angeordnet, so daß, bei Erzeugung von unterdruck in dem Zweitabsaugkanal 530, von der Vorderseite des Filters her Luft in diesen Kanal durch dessen Öffnung 531 gesaugt wird, die Pulvermaterial, das von den Schabelippen 421 von den Kabinenwandungen abgestreift wird, unmittelbar in den Zweitabsaugkanal führen kann, ohne den Raum hinter dem Filter 220 zu belasten. Über einen Zweitabsaugschlauch 533 besteht die Verbindung zu dem erwähnten externen Filteraggregat.

Fig. 19 zeigt dann noch eine Möglichkeit zur Abreinigung der Reinigungselemente 42 bzw. der Schabelippen 421 selbst, indem in vorderer Position der Reinigungsvorrichtung 4 mit dem Flächenfilter 220 in der Kabine entlang deren Randes, in Fig. 17 nicht erkennbar, ein Druckluftkanal 423 vorgesehen ist. Dieser Kanal 423 läuft um die Vorderseite der Kabinenöffnung 13 um, und zwar entsprechend der Anordnung des Kranzes der Reinigungselemente 42. Wenn die Schabelippen an der Vorderkante der Kabine angekommen sind, so schließt die Stirnseite des die Schabelippen tragenden Trägers 41 mit dem Innenrand des Druckluftkanals 423 ab und läßt nur dessen Öffnung 424 gegen den Absaugkanal 530 frei. In dem Kanal werden Druckluftimpulse erzeugt, die das Pulver von den Schabelippen entfernen und es bei Erzeugung eines entsprechenden Unterdrucks in dem Ringkanal 530 in diesen hineinsaugen, so daß es von dort zu einem externen Nachfiltergerät gelangen und dem Pulverkreislauf wieder zugeführt werden kann.

Wie man aus den Ausführungsformen der Reinigungsvorrichtung 4 in der Fig. 5, 7, 9 und 10 erkennt, kann diese bei Einsatz in Durchlaufkabinen mit einem Durchlaß 40 für den ungehinderten Werkstucktransport z.B. mittels Kreisförderer 401 (nur angedeutet) ausgestattet sein oder aus dem Bereich der Werkstückförderung herausgeschwenkt oder herausgefahren werden.

Die als durchgehend umlaufenden Kränze angeordneten Schabelippen 421 gemäß Fig. 20-22 sind so angebracht, daß sie, jeweils in Bewegungsrichtung ihres Trägers 41 gesehen, gegen die Wandung 11 (und/oder Boden/Decke) mit unterschiedlich hohem Anpreßdruck anliegen. Das geschieht hier durch die Unterschiede in der frei beweglichen Länge der Lippen infolge ihrer Lagerung und Widerlager, also Fixpunkte an dem Träger, indem die Lagerpunkte zur Unterkante des Trägers beabstandet sind. Jedoch kann man zu diesem Zweck auch z.B. Stützbleche vorsehen. In Förderrichtung B hat, wie erkennbar, die vorauslaufende Schabelippe 421a eine geringere Anpreßkraft gegenüber der Unterlage als die nachlaufende Lippe 421b. Die vorauslaufende Schabelippe 421a bildet infolge des hier größeren Abstandes zwischen Fixpunkt und Auflagepunkt bei vorgegebener Elastizität einen größeren Krümmungsbogen als die gegen die Trägerkante abgestützte Lippe 421b, so daß sie an letztere enger als im Spalt zwischen den beiden Platten des Trägers 41 angenähert ist, sich also ein von der Unterlage zum Träger erweiternder Kanal zwischen den Schabelippen ergibt.

Infolge der unterschiedlichen Anpreßkraft zwischen den Lippenkränzen 421a, b ergibt sich beim Arbeiten/Reinigen ohne Saugluft, daß die vorauslaufende Lippe 421a im wesentlichen nur eine Vorreinigung vollzieht und den Großteil des abzureinigenden Pulvers abtransportiert, wohingegen die nachlaufende Lippe 421b einen größeren Schabeeffekt auf die Unterlage 11 ausübt und für eine gründliche Endreinigung sorgt. Das so abgereinigte Pulver wird einem Sammelbehälter oder einer Sammelabsaugung innerhalb oder außerhalb der Kabine zugeführt.

Beim Arbeiten mit Saugluft, also Ausbildung des Trägers 41 als Saugwand, wird durch den Unterdruck in der Wand die Lippe 421a leicht angehoben und die nachlaufende 421b stärker angepreßt. Durch den entstehenden Spalt 426 zwischen Lippe 421a und Wand 11 kann die große Menge des lose aufliegenden bzw. anhaftenden Pulvers in die Saugwand hineingesaugt werden, wobei zugleich eine Beschleunigung der Luft- und Pulverströmung sowie deren Ausrichtung auf die Schabekante der nachlaufenden Lippe 421b bewirkt wird. So wird das von letzterer abgeschabte Restpulver besonders effektiv in den Luftstrom aufgenommen.

Natürlich ergibt sich, bei umgekehrter Laufrichtung des Trägers 41, jeweils der gleiche Effekt, nur in Umkehrung der Funktion von 421a und b.

Ein weiterer Vorteil dieser Lippenanordnung besteht, wie im Zusammenhang mit Fig. 21 erkennbar, darin, daß bei Überfahren von Ausnehmungen in der Unterlage, wie z.B. Schlitzen 110 (s. Fig. 4, 6, 14, 15), die beiden Lippen 421a, b infolge der Saugung mit ihren freien Rändern gegeneinander zur Anlage kommen und so den Absaugweg versperren. Auf diese Weise wird einfach und wirksam ein Saugdruckabfall in der Saugwand verhindert.

Wie das Ausführungsbeispiel der Fig. 22 zeigt, kann man zum Zwecke einer definierten Ausbildung des Spalts 426 an den freien Rändern der Lippen 421 Abstandshalter 425 vorsehen.

Weitestgehend einstückige Schabelippen wie die in Fig. 20-22 gezeigten haben gegenüber den Einzelelementen in Schräganordnung einen gewissen Vorteil insofern, als sie leicht, auch von Hand, zu reinigen sind, wie auch die Platten des Trägers 41 einzeln leicht zu Wartungs- und Reinigungszwecken demontiert werden können.

## Patentansprüche

1. Kabine zum Sprühbeschichten von Werkstücken mit pulverförmigem Beschichtungsmaterial, in einem von Wandungen (11), einem Kabinenboden (14) und einer Kabinendecke (16) bestimmten Kabineninnenraum (10) mit definierter Längsachse, in deren Richtung die Werkstücke in bzw. durch die Kabine (1) bewegbar sind, wobei der Kabine eine einen starren Träger (41) umfassende Reinigungsvorrichtung (4) zugeordnet ist, die im Kabineninnenraum in Richtung von dessen Längsachse bewegbar ist, der Träger (41) mit bei Arbeitsbewegung der Reinigungsvorrichtung mindestens gegen Teile der Querschnittskontur des Kabineninnenraums (Innenkontur) nachgiebig anliegenden mechanischen, gegen die Innenraumwandung gerichteten Reinigungselementen (42) bestückt ist und die Reinigungsvorrichtung der Innenkontur unter Belassen eines Arbeitsspalts (43) zwischen Träger (41) und Innenkontur angepaßt ist, wobei der Spalt (43) von den Reinigungselementen (42) elastisch überbrückt ist,
**dadurch gekennzeichnet,** daß
der Reinigungsvorrichtung (4) eine Unterdruckquelle zum Absaugen des mittels der Reinigungsvorrichtung von der Wandung gelösten Pulvermaterials unmittelbar zugeordnet ist.

2. Kabine nach Anspruch 1, **dadurch gekennzeichnet,** daß der Träger (41) mindestens eine Trägerplatte (410) umfaßt.

3. Kabine nach Anspruch 1 oder 2, **dadurch gekennzeichnet,** daß die Reinigungselemente (42) in Form von gegen die Wand gerichteten Schabekanten (421) am Rand (411) des Trägers (41) bzw. der Trägerplatte (410) angeordnet sind.

4. Kabine nach einem der Ansprüche 1 bis 3 , **dadurch gekennzeichnet,** daß die Reinigungselemente (42) als Schabelippen (421) aus elastischem Material ausgebildet sind.

5. Kabine nach Anspruch 4 , **dadurch gekennzeichnet,** daß die Schabelippen (421) als gegen die Bewegungsrichtung (B) schrägwinklig verlaufende Einzelelemente (42) ausgebildet sind, die zueinander nach Art von Leitschaufeln versetzt und mit ihren jeweils benachbarten Begrenzungskanten einander in Bewegungsrichtung überlappend angeordnet sind.

6. Kabine nach Anspruch 5 , **dadurch gekennzeichnet,** daß die Schabekanten/Schabelippen (421) in zueinander in Bewegungsrichtung beabstandeter, hinsichtlich der Durchlässe zwischen Einzelelementen überlappender Doppelkranzanordnung vorgesehen sind.

7. Kabine nach Anspruch 4 , **dadurch gekennzeichnet,** daß die Schabelippen (421) als mindestens ein durchgehend umlaufender Kranz (425) auf dem Träger (41) angeordnet sind.

8. Kabine nach Anspruch 7 , **dadurch gekennzeichnet,** daß die Schabekanten/Schabelippen (421) derart an dem Träger (41) angeordnet sind, daß sie in den beiden einander entgegengesetzten Bewegungsrichtungen der Reinigungsvorrichtung (4) unterschiedlich hohe Anpreßkräfte gegen die Innenkontur ausüben.

9. Kabine nach Anspruch 7 , **dadurch gekennzeichnet,** daß die Schabekanten/Schabelippen (42) in Doppelkranzanordnung derart vorgesehen sind, daß die in Bewegungsrichtung der Reinigungsvorrichtung (4) jeweils vorauslaufende Schabelippe (421a) mit einer geringeren Anpreßkraft auf die Innenkontur beaufschlagt ist als die jeweils nachlaufende Schabelippe (421b).

10. Kabine nach einem der Ansprüche 2 bis 9 , **dadurch gekennzeichnet,** daß die Schabekanten/Schabelippen (421) einseitig mit Abstandshaltern (425) zur Erzeugung eines definierten Durchlasses (426) zwischen den Schabekanten/Lippenrändern und der Innenkontur bestückt sind.

11. Kabine nach einem der Ansprüche 2 bis 10 **, dadurch gekennzeichnet,** daß die mindestens eine Trägerplatte (410) umfassende Reinigungsvorrichtung (4) von einer Kabineneintrittsöffnung (13) her in die Kabine (1) einfahrbar ist, wobei eine Quelle für Absaugunterdruck in Bewegungsrichtung (B) von der Trägerplatte wirksam angeordnet ist.

12. Kabine nach Anspruch 10 , **dadurch gekennzeichnet,** daß auf der Seite des Unterdrucks eine Absaugeinrichtung (5, 21) mit Filtrierung angeordnet ist.

13. Kabine nach einen der Ansprüche 1 bis 12 , **dadurch gekennzeichnet,** daß sie mit einer zweiteiligen Reinigungsvorrichtung (4a, 4b) ausgebildet ist, deren beide Teile von den Kabinenenden her aufeinander zu bewegbar angeordnet sind, wobei sich zwischen beiden Teilen eine Unterdruckquelle (5) befindet.

14. Kabine nach Anspruch 13 , **dadurch gekennzeichnet,** daß die Unterdruckquelle (5) als zentraler, sich im wesentlichen senkrecht zur Bewegungsrichtung erstreckender Absaugschlitz (51) vorgesehen ist.

15. Kabine nach einem der Ansprüche 1 bis 14 , **dadurch gekennzeichnet,** daß sie mit einem sich in Bewegungsrichtung der Reinigungsvorrichtung (4)/ Träger (41) erstreckenden Absaugkanal (52) im Kabinenboden (14) ausgebildet ist, wobei der (die) Träger(platten) dichtend in diesen Absaugkanal hineinragt(en).

16. Kabine nach Anspruch 15 , **dadurch gekennzeichnet,** daß der Absaugkanal (52) mittig in einem sich gegen ihn schräg abfallend erstreckenden Kabinenboden (14) angeordnet ist.

17. Kabine nach einem der Ansprüche 10 oder 13 , **dadurch gekennzeichnet,** daß die Reinigungsvorrichtung (4) als Saugwand (45) mit einem umlaufenden Kranz von Reinigungselementen (42) und sich mit ihr bewegender Unterdruckquelle (451) unmittelbar hinter den Reinigungselementen ausgebildet ist,

18. Kabine nach Anspruch 17 , **dadurch gekennzeichnet,** daß die Reinigungselemente (42) in Doppelkranzanordnung vorgesehen sind und sich die Unterdruckquelle (451) zwischen diesen Kränzen befindet.

19. Kabine nach Anspruch 17 oder 18 , **dadurch gekennzeichnet,** daß sie mit einer Patronenfilterabsaugeinrichtung (21) ausgestattet ist.

20. Kabine nach Anspruch 19 , **dadurch gekennzeichnet,** daß sie mit einer Flächenfiltereinrichtung (22) ausgestattet und die Patronenfiltereinrichtung (21) als Nachreinigungseinrichtung vorgesehen ist.

21. Kabine nach einem der Ansprüche 17 bis 20 , **dadurch gekennzeichnet,** daß sie mit einer Zweitabsaugkanalanordnung (53), umfassend eine außerhalb der Kabine befindliche Filtereinrichtung, ausgebildet ist.

22. Kabine nach Anspruch 21 , **dadurch gekennzeichnet,** daß die Zweitabsaugkanalanordnung als mindestens eine im Bodenbereich (14) der Kabine (1) angeordnete Rinne (53) vorgesehen ist, die unterhalb des Wirkbereichs der Filter (21, 22) liegt.

23. Kabine nach einem der Ansprüche 17 bis 22 , **dadurch gekennzeichnet,** daß die Saugwand (45) mittels eines im Deckenbereich der Kabine (1) außerhalb derselben vorgesehenen Antriebs (46) bewegbar gelagert und ihr dort ein Absaugkanal (54) zugeordnet ist.

24. Kabine nach Anspruch 23 , **dadurch gekennzeichnet,** daß der Antrieb als getriebener Zahnriemen (46) ausgebildet und derart über dem Absaugkanal (54) angeordnet ist, daß der Riemen den bei Bewegung der Saugwand (45) jeweils freiliegenden Bereich eines Lufteintrittsschlitzes (541) des Kanals (54) dichtend abdeckt.

25. Kabine nach einem der Ansprüche 17 bis 24 , **dadurch gekennzeichnet,** daß die Saugwand (45) als Hohlwand mit entsprechenden Lufteintrittsöffnungen (453) ausgebildet ist.

26. Kabine nach Anspruch 21 , **dadurch gekennzeichnet,** daß die Saugwand (45) mit einem sich im wesentlichen über ihre Gesamtfläche erstreckenden flächigen (Flach-) Filter (220) ausgerüstet und der Zweitabsaugkanal (53) als schmaler, entlang der Kontur der Saugwand umlaufender Kranz (530) oder Ring angeordnet ist.

27. Kabine nach Anspruch 26 , **dadurch gekennzeichnet,** daß der umlaufende Zweitabsaugkanal (530) mit einer in den Arbeitsspalt (43) gerichteten Saugöffnung (532) und einer sich ringförmig von dem Rand (411) des Trägers (41) gegen die Kabinenwand (11) erstreckenden elastischen Dichtlippe (422) ausgebildet ist, während er in Richtung auf die Schabelippen (421) offen ist.

28. Kabine nach Anspruch 26 oder 27 , **dadurch gekennzeichnet,** daß das flächige Filter (220) mit einer Filterreinigungsvorrichtung ausgerüstet ist.

29. Kabine nach Anspruch 28 , **dadurch gekennzeichnet,** daß die Filterreinigungsvorrichtung eine die Filterrückseite parzellenartig beaufschlagende Drucklufteinrichtung mit entlang der Filterrückseite verfahrbaren und diese entgegen der Filterrichtung beaufschlagenden Druckluftdüsen ist.

30. Kabine nach einem der Ansprüche 1 bis 29 , **dadurch gekennzeichnet,** daß sie mit einer Abreinigungsvorrichtung für die Reinigungselemente (42) bzw. Schabelippen (421) in Form einer Druckimpuls-Beaufschlagungseinrichtung (423) ausgebildet ist.

31. Kabine nach Anspruch 30 , **dadurch gekennzeichnet,** daß die Druckimpuls-Beaufschlagungseinrichtung als ein um die Kabinenöffnung (13) umlaufender, entsprechend den Reinigungselementen (42)/Schabelippen (421) sich erstreckender und gegen diese offener Druckluftkanal (423) ausgebildet ist.

32. Kabine nach Anspruch 31 , **dadurch gekennzeichnet,** daß die Öffnung (424) des Druckluftkanals (423) im wesentlichen der Dimension des Arbeitsspaltes (43) entspricht.

33. Kabine nach Anspruch 31 oder 32 , **dadurch gekennzeichnet,** daß der Druckluftkanal (423) in vorderster Position der Reinigungsvorrichtung (4) mit deren Träger (41) dichtend abschließt derart, daß er ausschließlich die Reinigungselemente (42)/Schabelippen (421) beaufschlagt.

34. Kabine nach Anspruch 3 und einem der Ansprüche 17, 18 oder 28 , **dadurch gekennzeichnet,** daß die Reinigungsvorrichtung als Saugwand ausgebildet und mit einem von dem/den Pulverrückgewinnungsabscheider(n)/filter(n) unabhängigen Sammelfilter verbunden ist.

## Claims

1. Booth for the spray-coating of workpieces with powdery coating material, in a booth interior (10) defined by walls (11), a booth floor (14) and a booth ceiling (16) and having a specific longitudinal axis, in the direction of which the workpieces are movable into or through the booth (1), the booth being assigned a cleaning device (4) which comprises a rigid carrier (41) and which is movable in the cabin interior in the direction of its longitudinal axis, the carrier (41) being equipped with mechanical cleaning elements (42) which, during the working movement of the cleaning device, bear flexibly at least against parts of the cross-sectional contour of the booth interior (inner contour) and which are directed towards the interior wall, and the cleaning device being adapted to the inner contour with a working gap (43) being left between carrier (41) and inner contour, the gap (43) being bridged elastically by the cleaning elements (42), characterized in that the cleaning device (4) is assigned directly a vacuum source for sucking away the powder material released from the wall by means of the cleaning device.

2. Booth according to claim 1, characterized in that the carrier (41) comprises at least one carrier plate (410).

3. Booth according to claim 1 or 2, characterized in that the cleaning elements (42) are arranged on the edge (411) of the carrier (41) or of the carrier plate (410) in the form of scraping edges (421) directed towards the wall.

4. Booth according to any one of claims 1 to 3, characterized in that the cleaning elements (42) are designed as scraping lips (421) made of elastic material.

5. Booth according to claim 4, characterised in that the scraping lips (421) are designed as individual elements (42) which extend at an oblique angle relative to the direction of movement (B) and which are offset relative to one another in the manner of guide blades and are arranged with their respective adjacent limiting edges overlapping one another in the direction of movement.

6. Booth according to claim 5, characterized in that the scraping edges/scraping lips (421) are provided in a double-crown arrangement mutually spaced in the direction of movement and overlapping in respect of the passages between individual elements.

7. Booth according to claim 4, characterized in that the scraping lips (421) are arranged on the carrier (41) as at least one rotationally continuous crown (425).

8. Booth according to claim 7, characterised in that the scraping edges/scraping lips (421) are so arranged on the carrier (41) that they exert pressure forces of differing amount against the inner contour in the two mutually opposed directions of movement of the cleaning device (4).

9. Booth according to claim 7, characterized in that the scraping edges/scraping lips (42) are so provided in a double-crown arrangement that the respective scraping lip (421a) leading in the direction of movement of the cleaning device (4) is applied to the inner contour with a lower pressure force than the respective trailing scraping lip (421b).

10. Booth according to any one of claims 2 to 9, characterized in that the scraping edges/scraping lips (421) are equipped on one side with spacers (425) for producing a specific passage (426) between the scraping edges/lip edges and the inner contour.

11. Booth according to any one of claims 2 to 10, characterized in that the cleaning device (4) comprising at least one carrier plate (410) can be moved into the booth (1) from a booth entry orifice (13), a source for a suction vacuum being arranged effectively from the carrier plate in the direction of movement (B).

12. Booth according to claim 10, characterized in that a suction device (5, 21) with filtering is arranged on the same side as the vacuum.

13. Booth according to any one of claims 1 to 12, characterized in that it is designed with a two-part cleaning device (4a, 4b), the two parts of which are arranged so as to be movable towards one another from the booth ends, a vacuum source (5) being located between the two parts.

14. Booth according to claim 13, characterized in that the vacuum source (5) is provided as a central suction slit (51) extending essentially perpendicularly relative to the direction of movement.

15. Booth according to any one of claims 1 to 14, characterized in that it is designed with a suction channel (52) located in the booth floor (14) and extending in the direction of movement of the cleaning device (4)/carrier (41), the carrier or the carrier plates projecting sealingly into this suction channel.

16. Booth according to claim 15, characterized in that the suction channel (52) is arranged centrally in a booth floor (14) extending obliquely downwards towards it.

17. Booth according to any one of claims 10 or 13, characterized in that the cleaning device (4) is designed as a suction wall (45) with a continuous crown of cleaning elements (42) and a vacuum source (451), moving with it, directly behind the cleaning elements.

18. Booth according to claim 17, characterized in that the cleaning elements (42) are provided in a double-crown arrangement, and the vacuum source (451) is located between these crowns.

19. Booth according to claim 17 or 18, characterized in that it is equipped with a cartridge-filter suction device (21).

20. Booth according to claim 19, characterized in that it is equipped with a surface-filter device (22), and the cartridge-filter device (21) is provided as a secondary cleaning device.

21. Booth according to any one of claims 17 to 20, characterized in that it is designed with a secondary suction-channel arrangement (53) comprising a filter device located outside the booth.

22. Booth according to claim 21, characterized in that the secondary suction-channel arrangement is provided as at least one gutter (53) which is arranged in the floor region (14) of the booth (1) and which is located under the effective region of the filters (21, 22).

23. Booth according to any one of claims 17 to 22, characterized in that the suction wall (45) is mounted movably by means of a drive (46) provided in the ceiling region of the booth (1) and outside the latter, and a suction channel (54) is assigned to it there.

24. Booth according to claim 23, characterized in that the drive is designed as a driven toothed belt (46) and is so arranged above the suction channel (54) that the belt sealingly covers that region of an air-inflow slit (541) of the channel (54) respectively exposed during the movement of the suction wall (45).

25. Booth according to any one of claims 17 to 24, characterized in that the suction wall (45) is designed as a hollow wall with appropriate air-inflow orifices (453).

26. Booth according to claim 21, characterized in that the suction wall (45) is equipped with a sheet-like (flat) filter (220) extending essentially over its entire surface and the secondary suction channel (53) is arranged as a narrow crown (530) or a ring continuous along the contour of the suction wall.

27. Booth according to claim 26, characterized in that the continuous secondary suction channel (530) is designed with a suction orifice (532) directed into the working gap (43) and with an elastic sealing lip (422) extending in the form of a ring from the edge (411) of the carrier (41) towards the booth wall (11), whilst it is open in the direction of the scraping lips (421).

28. Booth according to claim 26 or 27, characterized in that the sheet-like filter (220) is equipped with a filter-cleaning device.

29. Booth according to claim 28, characterized in that the filter-cleaning device is a compressed-air device applying a force on the filter rear side in a zone by zone manner, with compressed-air nozzles movable along the filter rear side and applying a force on this oppositely to the filter direction.

30. Booth according to any one of claims 1 to 29, characterized in that it is designed with a cleaning-off device for the cleaning elements (42) or scraping lips (421) in the form of a pressure-pulse loading device (423).

31. Booth according to claim 30, characterized in that the pressure-pulse loading device is designed as a compressed-air channel (423) encircling the booth orifice (13), extending according to the cleaning elements (42)/scraping lips (421) and open towards these.

32. Booth according to claim 31, characterized in that the orifice (424) of the compressed-air channel (423) corresponds essentially to the dimension of the working gap (43).

33. Booth according to claim 31 or 32, characterized in that, in the foremost position of the cleaning device (4), the compressed-air channel (423) is sealingly flush with the carrier (41) of the latter, in such a way that it applies force only on the cleaning elements (42)/scraping lips (421).

34. Booth according to claim 3, and one of claims 17, 18 or 28 characterized in that the cleaning device is designed as a suction wall and is connected to a collecting filter independent of the powder-recovery separator or separators/filter or filters.

## Revendications

1. Cabine pour enduction par pulvérisation de pièces en oeuvre à l'aide d'un matériau d'enduction en poudre, dans un volume intérieur de cabine (10) défini par des parois (11), un plancher de cabine (14) et un plafond de cabine (16), cet espace intérieur ayant un axe longitudinal parfaitement défini, dans la direction duquel les pièces en oeuvre peuvent se déplacer dans ou à travers la cabine (1) ; à la cabine étant affecté un dispositif de nettoyage (4), comportant un support rigide (41), dispositif de nettoyage qui peut se déplacer dans le volume intérieur de la cabine dans la direction de son axe longitudinal, le support (41) étant pourvu d'éléments de nettoyage (42), de nature mécanique, dirigés vers la paroi de l'espace intérieur, s appuyant d'une manière déformable, lors du déplacement effectif du dispositif de nettoyage, au moins contre des parties du contour de la section transversale du volume intérieur de la cabine (contour intérieur) ; et le dispositif de nettoyage étant adapté au contour intérieur, en laissant une fente de travail (41) entre le support (41) et le contour intérieur, la fente (43) étant recouverte d'une manière élastique par les éléments de nettoyage (42), caractérisée en ce qu'au dispositif de nettoyage (4) est directement affectée une source de dépression, destinée à aspirer le matériau en poudre qui se détache de la paroi grâce au dispositif de nettoyage.

2. Cabine selon la revendication 1, caractérisée en ce que le support (41) comporte au moins une plaque-support (410).

3. Cabine selon la revendication 1 ou 2, caractérisée en ce que les éléments de nettoyage (42) sont, sous forme d'arêtes racleuses (421) dirigées contre la paroi, disposés sur le bord (411) du support (41) ou de la plaque-support (410).

4. Cabine selon l'une des revendications 1 à 3, caractérisée en ce que les éléments de nettoyage (42) sont conçus comme des lèvres racleuses (421) en un matériau élastique.

5. Cabine selon la revendication 4, caractérisée en ce que les lèvres racleuses (421) sont conçues comme des éléments individuels (42), courant selon un certain angle par rapport au sens de déplacement (B), éléments individuels qui sont décalés les uns par rapport aux autres, un peu comme des aubes directrices, et qui, par leurs arêtes de délimitation contiguës, sont disposés de façon à être en chevauchement les uns par rapport aux autres dans le sens du déplacement.

6. Cabine selon la revendication 5, caractérisée en ce que les arêtes/lèvres racleuses (421) sont prévues selon une disposition en double couronne, à une certaine distance les unes des autres dans le sens du déplacement, et en chevauchement pour ce qui est des passages entre les éléments individuels.

7. Cabine selon la revendication 4, caractérisée en ce que les lèvres racleuses (421), représentant au moins une couronne continue (425), sont disposées sur le support (41).

8. Cabine selon la revendication 7, caractérisée en ce que les arêtes/lèvres racleuses (421) sont disposées contre le support (41) de façon à exercer contre le contour intérieur des forces d'appui d'intensités différentes, dans les deux sens de déplacement, opposés l'un à l'autre, du dispositif de nettoyage (4).

9. Cabine selon la revendication 7, caractérisée en ce que les arêtes/lèvres racleuses (42) sont, dans le cadre d'une disposition en double couronne, prévues de façon que la lèvre amont (421a) dans le sens de déplacement du dispositif de nettoyage (4) appuie sur le contour intérieur avec une force d'appui inférieure à celle de la lèvre racleuse immédiatement en aval (421b).

10. Cabine selon l'une des revendications 2 à 9, caractérisée en ce que les arêtes/lèvres racleuses (421) sont, sur un côté, munies d'écarteurs (425), destinés à réaliser un passage parfaitement défini (426) entre les arêtes racleuses/bords des lèvres et le contour intérieur.

11. Cabine selon l'une des revendications 2 à 10, caractérisée en ce que le dispositif de nettoyage (4), qui comporte au moins une plaque-support (410), peut être introduit dans la cabine (1) à partir d'une ouverture d'entrée de cabine (13), une source de dépression d'aspiration étant disposée d'une manière active dans le sens de déplacement (B) de la plaque-support.

12. Cabine selon la revendication 10, caractérisée en ce qu'un dispositif d'aspiration (5, 21), muni de systèmes de filtration, est disposé sur le côté de la dépression.

13. Cabine selon l'une des revendications 1 à 12, caractérisée en ce qu'elle est conçue comme un dispositif de nettoyage en deux parties (4a, 4b), dont les deux parties sont disposées de façon à pouvoir se déplacer l'une vers l'autre à partir des extrémités de la cabine, une source de dépression (5) se trouvant entre les deux parties.

14. Cabine selon la revendication 13, caractérisée en ce que la source de dépression (5) est prévue sous la forme d'une fente d'aspiration (51), centrale et s'étendant essentiellement perpendiculairement au sens du déplacement.

15. Cabine selon l'une des revendications 1 à 14, caractérisée en ce qu'elle est conçue avec, dans le plancher (14) de la cabine, une gaine d'aspiration (52), s'étendant dans le sens de déplacement du dispositif d'aspiration (4) / support (41), le ou les supports, ou la ou les plaques-support, dépassant d'une manière étanche dans cette gaine d'aspiration.

16. Cabine selon la revendication 15, caractérisée en ce que la gaine d'aspiration (52) est disposée en position centrale, dans un plancher de cabine (14) s'étendant d'une manière inclinée vers le bas contre cette gaine.

17. Cabine selon l'une des revendications 10 ou 13, caractérisée en ce que le dispositif de nettoyage (4) est conçu comme une paroi aspirante (45), avec une couronne périphérique d'éléments de nettoyage (42), avec, immédiatement en arrière des éléments de nettoyage, une source de dépression (451) qui se déplace avec cette couronne.

18. Cabine selon la revendication 17, caractérisée en ce que les éléments de nettoyage (42) sont prévus selon une disposition en double couronne, la source de dépression (451) se trouvant entre ces couronnes.

19. Cabine selon la revendication 17 ou 18, caractérisée ence qu'elle est munie d'un dispositif d'aspiration à filtre à cartouche (21).

20. Cabine selon la revendication 19, caractérisée en ce qu'elle est équipée d'un dispositif de filtre plan (22), et que l'on prévoit le dispositif de filtre à cartouche (21) en tant que dispositif de post-nettoyage.

21. Cabine selon l'une des revendications 17 à 20, caractérisée en ce qu'elle possède un montage de double gaine d'aspiration (53), qui englobe un dispositif de filtration se trouvant à l'extérieur de la cabine.

22. Cabine selon la revendication 21, caractérisée en ce que le montage à deux gaines d'aspiration est prévu sous forme d'une rigole (53), disposée dans la zone de plancher (14) de la cabine, rigole qui se trouve en-dessous de la zone d'action du filtre (21, 22).

23. Cabine selon l'une des revendications 17 à 22, caractérisée en ce que la paroi aspirante (45) est logée de façon à pouvoir se déplacer à l'aide d'un mécanisme d'entraînement (46), prévu dans la zone du plafond de la cabine (1) mais à l'extérieur de cette dernière, une gaine d'aspiration (54) lui y étant affectée.

24. Cabine selon la revendication 23, caractérisée en ce que le mécanisme d'entraînement est conçu comme une courroie crantée menée (46), et est disposé au-dessus de la gaine d'aspiration (54) de façon que la courroie recouvre d'une manière étanche la zone, qui se dégage lors du déplacement de la paroi aspirante (45), d'une fente d'entrée d'air (541) de la gaine (54).

25. Cabine selon l'une des revendications 17 à 24, caractérisée en ce que la paroi aspirante (45) est réalisée sous forme d'une paroi creuse comportant des ouvertures d'entrée d'air correspondantes (453).

26. Cabine selon la revendication 21, caractérisée en ce que la paroi aspirante (45) est munie d'un filtre (plan) plat (220), s'étendant essentiellement sur toute sa surface, la double gaine d'aspiration (53) étant disposée sous forme d'une couronne (530) étroite, courant le long du contour de la paroi aspirante, ou d'une structure annulaire.

27. Cabine selon la revendication 26, caractérisée en ce que la double gaine d'aspiration périphérique (530) est conçue avec une ouverture d'aspiration (532), dirigée dans la fente de travail (43), et avec une lèvre d'étanchéité élastique (422), s'étendant d'une manière annulaire à partir du bord (411) du support (41) vers la paroi (11) de la cabine, tout en étant ouverte dans la direction des lèvres racleuses (421).

28. Cabine selon la revendication 26 ou 27, caractérisée en ce que le filtre plan (220) est équipé d'un dispositif de nettoyage du filtre.

29. Cabine selon la revendication 28, caractérisée en ce que le dispositif de nettoyage du filtre est un dispositif à air comprimé, qui agit sur le côté arrière du filtre par zones, comportant des buses d'air comprimé, pouvant se déplacer le long du côté arrière du filtre, et agissant sur ce dernier, dans le sens inverse de la direction du filtre.

30. Cabine selon l'une des revendications 1 à 29, caractérisée en ce qu'elle est conçue avec un dispositif de nettoyage destiné aux éléments de nettoyage (42) ou aux lèvres racleuses (421), sous forme d'un dispositif agissant sous l'action d'impulsions de pression (423).

31. Cabine selon la revendication 30, caractérisée en ce que le dispositif d'action sous l'effet d'impulsions de pression est conçu comme une gaine d'air comprimé (423), qui entoure l'ouverture (13) de la cabine, qui s'étend conformément aux éléments de nettoyage (42)/lèvres racleuses (421) et est ouvert contre ces dernières.

32. Cabine selon la revendication 31, caractérisée en ce que l'ouverture (424) de la gaine d'air comprimé (423) correspond essentiellement aux dimensions de la fente de travail (43).

33. Cabine selon les revendications 31 ou 32, caractérisée en ce que la gaine d'air comprimé (423), dans la position située le plus en avant du dispositif de nettoyage (4), se termine en étanchéité avec son support (41), de façon à n'agir que sur les éléments de nettoyage (42)/les lèvres racleuses (421).

34. Cabine selon la revendication 3 et l'une des revendications 17, 18 ou 28, caractérisée en ce que le dispositif de nettoyage est conçu comme une paroi aspirante, et est relié à un filtre collecteur, indépendamment du ou des séparateurs de récupération de poudre/filtres.
